# EUROPÄISCHE PATENTSCHRIFT

(11) **EP 1 027 188 B1**
(45) Veröffentlichungstag und Bekanntmachung des Hinweises auf die Patenterteilung: **31.07.2002**
(21) Anmeldenummer: 98959753.9
(22) Anmeldetag: 19.10.1998
(51) Int. Cl.: B24C 3/06, B24C 9/00, B24C 5/04

(54) **VERFAHREN UND VORRICHTUNG ZUM BEARBEITEN, INSBESONDERE REINIGEN, ABRASIVEN ABTRAGEN ODER ABTRAGEN VON BESCHICHTUNGEN, GRAFFITI ODER SONSTIGEN OBERFLÄCHLICHEN VERUNREINIGUNGEN AUF TEILEN, WERKSTÜCKEN ODER FLÄCHEN**
METHOD AND DEVICE FOR TREATING, ESPECIALLY CLEANING, ABRASIVE CLEARING OR STRIPPING OF COATINGS, GRAFFITI OR OTHER SUPERFICIAL SOILING ON PARTS, WORK PIECES OR SURFACES
PROCEDE ET DISPOSITIF POUR TRAITER, NOTAMMENT POUR NETTOYER, RETIRER OU DETACHER PAR ABRASION, DES REVETEMENTS, GRAFFITI OU AUTRES SALISSURES SUPERFICIELLES SUR DES PIECES OU SURFACES.

(30) Priorität: 19.10.1997 DE 19747838
(43) Veröffentlichungstag der Anmeldung: 16.08.2000
(73) Patentinhaber: Pieper, Gerard, 03222 Lübbenau (DE)
(72) Erfinder: Pieper, Gerard, 03222 Lübbenau (DE)
(74) Vertreter: Hannig, Wolf-Dieter, Dipl.-Ing.
(86) Internationale Anmeldenummer: DE9803106
(87) Internationale Veröffentlichungsnummer: WO9920435

(56) Entgegenhaltungen:
- EP-A- 0 324 448
- EP-A- 0 416 711
- WO-A-96/00138
- WO-A-96/14962
- BE-A- 713 294
- CH-A- 314 063
- DE-A- 3 413 576
- DE-A- 4 003 324
- US-A- 4 646 482

## Beschreibung

Die Erfindung betrifft ein Verfahren zum Bearbeiten, insbesondere Reinigen, Abtrennen von Beschichtungen, Graffiti oder sonstigen oberflächlichen Verunreinigungen auf Teilen, Werkstücken oder Flächen aus Stein, Beton, Holz, Metall, Kunststoff, Glas, Keramik oder Papier, bei dem ein Strahlmittel durch Schwerkraft aus einem Bevorratungsbehälter in einen innerhalb eines aus Zu- und Ableitungen gebildeten Schlauchleitungssystems geführten Tragluftstrom eingebracht, mittels Unterdruck durch diesen befördert und gegen die zu behandelnde Fläche in einer Strahlkammer durch eine Strahllanze geschleudert, von dort in den Tragluftstrom so zurückbefördert wird, dass das Strahlmittel im Kreislauf gefahren wird, wobei die Beschleunigung des Strahlmittels im wesentlichen durch den an der Strahlkammer anliegenden Unterdruck und durch die Erhöhung der Strahlgeschwindigkeit mittels Durchmesserverringerung von der Zuleitung auf die Strahllanze erzeugt wird.

Die Erfindung betrifft auch eine Vorrichtung zur Durchführung des Verfahrens mit einem an seinem unteren Ende konisch als Schütt-Trichter mit Auslauföffnung ausgebildeten Behälter für die Bevorratung eines fein- und/oder grobkörnigen Strahlmittels, das durch seine Schwerkraft in die Auslaßöffnung des Schütt-Trichters gelangt, welche an eine flexible Zuleitung zum Transport des Strahlmittels in eine mit einem Unterdruck erzeugenden Aggregat evakuierbare, die Teile oder Flächen aufnehmende Strahlkammer angeschlossen ist, die ihrerseits mit einer Unterdruck-Ableitung verbunden ist, die mit mindestens einem auf dem Schütt-Trichter des Behälters angeordneten weiteren Behälter verbunden ist, der seinerseits einen konisch ausgebildeten Schütt-Trichter aufweist und mit dem unterdruckerzeugenden Aggregat in Verbindung steht, wobei die Unterdruck-Ableitung tagential durch den Behältermantel in einen im Kopf des Behälters angeordneten Abscheider einbindet, wobei durch eine Öffnung in der Strahlkammer eine an die Unterdruck-Zuleitung angeschlossene, eine Düse tragende Strahllanze geführt ist, wobei die Unterdruck-Zuleitung mit einer Dosiereinrichtung und/oder einem Injektor für die Dosierung des Strahlmittels in den Kreislauf versehen und mit einem, eine Beschleunigungsstrecke bildenden geradlinig verlaufenden Beschleunigungsrohr verbunden ist, das der Strahllanze vorgeordnet ist und das gegenüber der Zuleitung eine weitere Durchmesserverrringerung aufweist.

Beschichtungen oder sonstige Verunreinigungen wie Ablagerungen usw. auf Wänden werden bekanntlich durch eine Strahlbehandlung mit einem körnigen Strahlmittel entfernt, das mit Überdruck von etwa 10 bis 300 bar gegen den zu strahlenden Gegenstand geschleudert wird. Das Strahlmittel, meistens feinkörniger Sand oder Metallteilchen, wird mit einem Druckluftstrom zu der Strahlstelle transportiert (siehe DE 31 27 012 A1, DE 34 13 576 A1, DE 37 38 246 A1, DE 40 03 324 A1, DE 40 14 085 C1, DE 41 43 113 C; DE 42 01 860 C1).
Aus der DE-OS 29 16 131 ist eine Lösung zur Behandlung einer Oberfläche bekannt, die aus einem mit einem Schütt-Trichter unterends versehenen Behälter mit Auslaß zur Bevorratung eines Schleifmittels, einer das Schleifmittel auf die abzuschleifende Oberfläche lenkende Pistole, die von einem Kanal durchzogen ist, an dessen Ende eine Druckluftquelle angeschlossen ist, einer Zuleitung, die den Auslaß des Behälters mit dem Kanal in der Pistole an einer Stelle stromabwärts von der Verbindung mit der Druckluftquelle verbindet, eine in der Zuleitung nächst dem Auslaß angebrachte Öffnung, durch die der Atmosphärendruck mit der Zuleitung in Verbindung steht, so dass Druckluft, die durch den Kanal der Pistole und über das Ende der Zuleitung strömt, in der Zuleitung einen Unterdruck erzeugt, der Luft durch die Öffnung ansaugt, wodurch Schleifmittel aus dem Auslaß abgezogen und aus dem anderen Ende des Kanals der Pistole auf die zu behandelnde Oberfläche geschleudert wird.
Der Lauf der Pistole ist von einer Haube umgeben, die auf die zu behandelnde Fläche aufsetzbar ist. Von der Haube führt eine Rückleitung zum Behälter, an dem außerdem eine Vakuumquelle angeschlossen ist, die über dem bevorrateten Schleifmittel einen Unterdruck erzeugt, der das auf die behandelnde Fläche geschleuderte Strahlgut aus der Haube in den Behälter saugt.
Mit dieser bekannten Lösung werden zwei Kreisläufe realisiert, ein Unterdruckkreislauf zum Absaugen von gebrauchtem Strahlgut und ein Überdruckkreislauf, der das Strahlgut auf die notwendige Strahlgeschwindigkeit beschleunigt, wobei die Zudosierung des Strahlgutes in den Überdruckstrom mit durch den Überdruck erzeugten Unterdruck durchgeführt wird. Beide Kreisläufe sind voneinander durch das im Behälter bevorratete Strahlgut als Druckbarriere getrennt.

Letztendlich arbeitet auch dieser bekannte Stand der Technik zur Erzeugung der notwendigen Strahlgutgeschwindigkeiten mit einem Überdruck, der an die Strahlpistole herangeführt werden muss und energetisch aufwendig bleibt. Der zusätzlich notwendige Unterdruckerzeuger im Sammelbehälter verkompliziert die Lösung außerdem.
Bedingt durch den zum Teil erheblichen Überdruck erhalten die Strahlmittel eine hohe Auftreffenergie, die bei empfindlichem Untergrund, beispielsweise Kunststoffflächen zu einer Beeinträchtigung oder sogar zur Zerstörung führen können. Eine feinfühlige Ablösung ohne Beeinträchtigung des Untergrundes ist nicht möglich.
Ein weiterer Nachteil dieser bekannten Lösung besteht darin, dass eine Abtrennung der abgelösten Lackschichten vom Strahlgut nicht erfolgt, d.h. das kontaminierte Strahlgut muss verworfen und durch neues ersetzt werden.

Aus der DE-OS 44 07 956 ist ein Sandstrahlkasten zur Oberflächenbehandlung von vorzugsweise flachen Materialoberflächen bekannt, der auf seiner vorderen Seite eine Öffnung aufweist, in welchem das vordere Ende einer an einer Druckluftquelle angeschlossenen Sandstrahlpistole einführbar ist, während die hintere Seite des Sandstrahlkastens ein Bearbeitungsfenster mit einer elastischen Abdichtleiste aufweist, welche auf die zu bearbeitende Materialoberfläche aufsetzbar ist. Der Strahlsand wird mittels Druckluft, d.h. unter Überdruck auf die zu behandelnde Fläche geleitet. An den Sandstrahlkasten ist ein Haushaltsstaubsauger angeschlossen, der im Strahlkasten einen Unterdruck erzeugt und das Strahlgut absaugt. Der Lauf der Strahlpistole ist durch eine in der vorderen Seite angeordnete Gummimembran in den Strahlkasten geführt und ist in der Lage Schwenkbewegungen auszuführen, um das Strahlgut unter verschiedenen Winkeln und Entfernungen auf die Behandlungsfläche aufzubringen.

Auch bei dieser bekannten Lösung erhält das Strahlgut seine Strahl- bzw. Bewegungsenergie durch Überdruck. Es sind wiederum zwei getrennte Kreisläufe, und zwar ein Überdruckkreislauf in Form eines Druckluftstromes zur Förderung des Sandes zur Pistole und ein Unterdruckkreislauf zur Absaugung des aus der Pistole ausgetretenen Sandes, notwendig. Der Aufwand ist dementsprechend hoch.
Das Strahlgut ist nach dem Strahlen mit dem abgelösten Material kontaminiert. Eine Trennung erfolgt nicht, so dass auch bei dieser bekannten technischen Lehre
das Strahlgut verworfen werden oder gesondert aufgearbeitet werden muss. Der durch den Überdruck beschleunigte Strahlgutstrom ist äußerst energiereich und für die Ablösung von Beschichtungen auf problembehafteten weichen Untergründen nicht geeignet, weil keine Regulierung der Strahlenergie möglich ist.

Die DE 36 29 623 A1 offenbart eine Einrichtung zum Reinigen von Oberflächen großflächiger Objekte mit einem körnigen Strahlmittel, mit einem parallel zur Objektoberfläche bewegbaren Strahlkorb, bei dem über eine offene Seite ein gegen die Oberfläche des Objektes gerichteter Strahl erzeugbar ist und bei dem von der Werkstoffoberfläche abprallende Strahlmittelteilchen mit den abgelösten Schmutzteilchen aufgefangen und abgeführt werden. Die bekannte. Einrichtung ist mit einer abgedichteten, mit Sichtfenster ausgestatteten Kabine zur Aufnahme einer Bedienungsperson derart verbunden, dass die Einrichtung im Sichtbereich der Bedienungsperson angeordnet ist und mit der Kabine eine bewegliche Arbeitseinheit bildet. Der Strahlraum steht über eine flexible Leitung mit einem Unterdruckraum in Verbindung, in dem Trenneinrichtungen zur Trennung von Abluft, wiedergewinnbarem Strahlmittel und Rückständen ausgebildet sind. Das rückgewonnene Strahlmittel wird einem Schleuderrad zugeführt, durch dessen Drehzahl die Strahlintensität einstellbar ist.
Bei diesem bekannten Stand der Technik ist zwar eine Kreislauffahrweise des Strahlmittels realisiert, jedoch sind auch hier ein Kreislauf um verbrauchtes Strahlmittel mit Unterdruck abzusaugen und ein Kreislauf für die Beschickung einer Strahlturbine mit Schleuderrad erforderlich. Das Strahlmittel erhält seine Bewegungsenergie durch die Drehung des Schleuderrades, was apparate- und steuerungstechnisch sehr aufwendig ist. Für die Entfernung von beispielsweise Graffiti ist eine derartige Konstruktion viel zu kompliziert und energetisch zu aufwendig.

Außerdem wurde mit der DE 196 14 555 A1 eine Vorrichtung und ein Verfahren zum abrasiven Strahlen, insbesondere Sandstrahlen von Werkstücken, insbesondere kleineren Werkstücken, beispielsweise im Hobbybereich am 30.10.1997 bekannt.
Die in diesem älteren Recht beschriebene Vorrichtung besteht aus einer allseitig im wesentlichen luftdicht geschlossenen Kammer mit mindestens einer, vorzugsweise mehreren verschließbaren Öffnungen, wobei die Kammer evakuierbar ist, einem Behälter zur Aufnahme von Strahlmittel, einer Strahlrohreinheit, die über eine der verschließbaren Öffnungen in die Kammer einführbar ist und die einen Zulaß für das Strahlmittel, einen Zulaß für Luft und eine Austrittsöffnung für das Strahlmittel aufweist, wobei der Zulaß für das Strahlmittel über eine Zuführleitung mit dem Strahlmittelbehälter verbindbar ist.
Die Strahlrohreinheit weist einen rohrförmigen Hauptteil mit einem Einlaß für das Strahlmittel, eine Lufteinlaßöffnung und eine Austrittsöffnung bzw. Düse für das Strahlmittel und die angesaugte Luft auf. Nach Einführung der Strahlrohreinheit durch eine der Öffnungen in der Kammer befindet sich die Lufteinlaßöffnung außerhalb der Kammer und die Luftaustrittsöffnung innerhalb der Kammer. Durch den an der Kammer mittels eines handelsüblichen angeschlossenen Staubsaugers wird durch die Lufteinlaßöffnung Umgebungsluft angesaugt, durch den in Kammer herrschenden Unterdruck Strahlmittel aus dem Behälter durch die Zuführleitung transportiert und aus der Austrittsöffnung der Strahlrohreinheit in die Kammer auf das zu bearbeitende Werkstück gelenkt. Mit dem Staubsauger wird die Luft und das Strahlgut aus der Kammer abgesaugt und vom Staubsaugerfilter aufgefangen.
Die in der DE 196 14 555 A1 beschriebene Lösung hat den Nachteil, dass die erreichten Strahlgeschwindigkeiten nur ausreichen, um kleinere Werkstücke zu säubern. Für größere Werkstücke bzw. Flächen ist diese Lösung nicht mehr geeignet. Außerdem kann der Strahlprozeß nur solange durchgeführt werden bis der Vorrat an Strahlmittel im Behälter aufgebraucht ist.
Das mit Verunreinigungen kontaminierte Strahlgut wird lediglich in die Staubsaugertüte entsorgt. Eine Trennung des Strahlgutes von den Kontaminationen erfolgt nicht, ebenso keine Rückführung des Strahlgutes in den Strahlkreislauf.
Für eine großflächige Strahlbehandlung von beispielsweise mit Graffiti-Besprühungen verunreinigte Flächen ist diese vorgeschlagene Lösung nicht geeignet. Dies trifft auch für größere Teile bzw. Werkstücke zu.

Aus der BE 713 294 A ist eine Schleifmaschine bekannt, die bei Unterdruck Schleifmittel in einen Luftstrom saugt, diesen Luft-Schleifmittelstrom in einem Zuführrohr über eine Leiteinrichtung zu einem in einer Blaskammer befindlichen Werkstück zum Abschleifen fördert, das Schleifmittel mit den Abfällen aus der Blaskammer absaugt und einem Zyklon zur Rückgewinnung des Schleifmittels zuführt und das rückgewonnene Schleifmittel in den Luftstrom erneut einspeist. Die Leiteinrichtung besteht aus einem flexiblen Zuführrohr, das mit einer Düse verbunden ist, welche gegenüber dem Zuführrohr einen geringeren Durchmesser aufweist, um die Schleifmittelteilchen vor ihrem Auftreffen auf die Werkstückoberfläche zu beschleunigen. Ziel dieser Lösung ist, dass Schleifmittel zurückzugewinnen und wiederzuverwenden.
Diese Schrift bildet die Grundlage für die Oberbegriffe der Patentansprüche 1 und 17.

Bei diesem Stand der Technik liegt der Erfindung die Aufgabe zugrunde, ein Verfahren und eine Vorrichtung der eingangs genannten Art derart zu verbessern, dass die Beschichtungen, Bemalungen, Schmutz und Ablagerungen auf Teilen oder auf ebenen oder gekrümmten offenen und/oder geschlossenen Flächen ohne Über- und Hochdruckerzeuger energetisch feinfühlig und staubfrei ohne nennenswerte Beeinträchtigung des Untergrundes bei geringem Energieeinsatz, hoher Flexibilität und umweltgerechter Zurückgewinnung und Wiederverwendung des Strahlmittels ablösbar sind.

Diese Aufgabe wird erfindungsgemäß dadurch gelöst, dass der Unterdruck im Kreislauf auf 50 bis 300 mbar eingestellt, das Strahlmittel dem Tragluftvolumenstrom in einer auf den Tragluftvolumenstrom bezogenen Menge von 0,01 bis 25,0% mit oder ohne Reinigungsflüssigkeit zudosiert, der Energieeintrag auf die zu bearbeitenden Teile mittels Einstellung der Strahlgeschwindigkeit des Strahlmittels von 20 bis 80 m/s durch eine weitere Durchmesserverringerung in Abhängigkeit der zu entfernenden Beschichtungen gesteuert, sodann das Strahlmittel-Luftgemisch mit einer sich rhythmisch wiederholenden Hin-und Herbewegung über die Behandlungsfläche hinweg unter Beobachtung gerichtet oder die Behandlungsfläche im Strahlmittel-Luftgemisch in Rotation versetzt und/oder verschwenkt wird, das Strahlmittel nach seiner Abtrennung und Sammlung ggf. getrocknet und das verbleibende Kontamination-Luftgemisch einer Feinreinigung im Naß - und/oder Trockensauger unterworfen wird, und dass Frischluft und/oder wahlweise die abgetrennte Luft alsdann gekühlt oder aufgeheizt dem Unterdruck-Kreislauf erneut zugeführt wird.

In einem weiteren bevorzugten Merkmal wird die Beschleunigung der Strahlmittel in die geradlinig verlaufende Beschleunigungsstrecke innerhalb der Unterdruck-Zuleitung durchgeführt, bevor diese in die Strahllanze eintreten.

Die Strahlmittel erhalten bei konstantem Volumenstrom nach einer weiteren bevorzugten Ausführungsform des erfindungsgemäßen Verfahrens eine zusätzliche Beschleunigung durch eine Durchmesserverringerung in der Zuleitung auf das 0,1 bis 0,9fache ihres Durchmessers (d1) über eine Länge des 5 bis 50fachen Innendurchmessers (d2) der durchmesserverringerten Zuleitung.

Die Geschwindigkeit der Strahlmittel lässt sich dadurch vor Eintritt in die Strahllanze entsprechend erhöhen und die spezifische Auftreffenergie der Strahlteilchen bei Austritt aus der Strahllanze durch die Veränderung des Durchmesserverhältnisses d2:d1, der Länge der Beschleunigungsstrecke und des Abstandes des vorderen Endes der Strahllanze von der Behandlungsfläche äußerst feinfühlig einstellen.
Mit dem erfindungsgemäßen Verfahren wird es damit möglich, die Bewegungsenergie der Strahlteilchen nach Art, Größe und Beschaffenheit der Beschichtung und des Untergrundes zu regeln.
Von besonderem Vorteil hat sich erwiesen, wenn der Strahlabstand von Strahllanze und Behandlungsfläche etwa das 0,1 bis 3,0fache des Innendurchmessers der Beschleunigungstrecke beträgt.

Strahlmittel aus Natriumhydrogencarbonat, Kunststoffteilchen, vorzugsweise Duroplastteilchen, Asche, zerkleinerte feinkörnige Schlacke, Korund, Quarz, metallische Teilchen, Glasperlen, pflanzliche/organische Teilchen oder deren Gemische sind besonders gut geeignet für eine Einstellung von Strahlgeschwindigkeiten durch eine Durchmesserverringerung.
Je nach Art der Strahlteilchen und der erteilten Strahlgeschwindigkeit lassen sich mit dem erfindungsgemäßen Verfahren Beschichtungen auf Metall, Farbaufsprühungen auf Kunststoff, Beschriftungen auf Papier, Verwitterungsablagerungen auf Stein, Schmutzablagerungen auf Beton, wenn notwendig ohne Abtrag des Untergrundes oder aber mit Abtrag des Untergrundes auch Rostschichten von Metallen abrasiv entfernen. Die Abrasivität des erfindungsgemäßen Verfahrens hängt im entscheidenden Maße von der auf die Strahlteilchen übertragenden Strahlenergie und deren Art ab.
Das erfindungsgemäße Verfahren zeichnet sich dadurch aus, dass die Strahlenergie in Abhängigkeit der Untergrundbeschaffenheit, des Charakters des Strahlmittels und der Art der zu entfernenden Beschichtung variierbar ist, so dass auch problembehaftete Verschmutzungen, beispielsweise in Form von Übermalungen vom Untergrund gelöst werden können, ohne den Untergrund zu zerstören oder nennenswert anzugreifen.
Die Bearbeitungswirkung der Strahlteilchen wird erfindungsgemäß weiter verbessert, wenn die Strahlmittel vor ihrer Beschleunigung mit üblichen Reinigungsflüssigkeiten benetzt werden.
Vor allem bei Graffiti-Verschmutzungen von größeren Flächen wird eine Strahlkammer auf den zu bearbeitenden Untergrund dichtend und verschiebbar aufgesetzt, evakuiert und das Strahlmittel-Luftgemisch über die Behandlungsfläche hin- und herbewegt.

Bei der Hin- und Herbewegung handelt es sich um eine Pendel- und/oder Schwenkbewegung des Strahlmittel-Luftgemisches in der Strahlkammer in einem eingeschränkten Winkelbereich innerhalb eines Kegels mit einem Öffnungswinkel von 30° bis 120°, vorzugsweise 90°.
Die Verschiebebewegung der Strahlkammer von einer Behandlungsfläche zu einer anderen wird vorteilhafterweise bei anliegendem Unterdruck durchgeführt. Natürlich ist es auch möglich, ohne die Erfindung zu verlassen, die Verschiebebewegung der Strahlkammer bei kurzgeschlossenem Kreislauf unter Atmospärendruck durchzuführen.

Für den Fall, dass Werkstücke nach dem erfindungsgemäßen Verfahren von Ablagerungen bzw. Rost zu bearbeiten sind, werden die Werkstücke zusätzlich im Strahlmittel-Luftgemisch in Rotation versetzt oder verschwenkt. Dies kann stationär oder auch durch Verfahren der Strahlkammer erfolgen.

Nachdem das Strahlmittel auf die jeweilige Behandlungsfläche aufgeschlagen ist, wird es durch den anliegenden Unterdruck aus der Strahlkammer ausgeschleust, vom Luftstrom separiert, ggf. gereinigt und in den Kreislauf zurückgeführt. Die Trägerluft kann in die Umgebung entweichen oder wird nach einem besonderen Merkmal des erfindungsgemäßen Verfahrens erhitzt oder gekühlt in den Unterdruck-Kreislauf zurückgeführt, sofern die Bearbeitung der Behandlungsfläche eine bestimmte Temperatur erforderlich macht. Dies erhöht den Wirkungsgrad der Bearbeitung entsprechend.

Nach einem weiteren bevorzugten Merkmal des erfindungsgemäßen Verfahrens wird eine Luftleistung von etwa 150 bis 400 m³/h, vorzugsweise 230 m³/h, durch einen Naß- und/oder Trockensauger oder eine Pumpe oder einen Verdichter oder ein Gebläse erzeugt.

Von besonderem Vorteil für die Durchführung des erfindungsgemäßen Verfahrens ist es, dass handelsübliche Aggregate ohne Änderungen eingesetzt werden können.
Je nach geforderter Luftleistung sind diese ein- oder mehrstufig ausgelegt.
Besonders gute Bearbeitungseffekte in der Entfernung von beispielsweise dünnen Bemalungen auf Blechflächen werden erzielt, wenn dem Tragluftvolumenstrom 0,013% Strahlmittel zudosiert wird.

Gelöst wird die erfindungsgemäße Aufgabe weiterhin durch eine Vorrichtung mit folgenden Merkmalen:
a) in die Unterdruck-Leitung ist stromabwärts gelegen eine ein- und auskoppelbare Benetzungseinrichtung für die Benetzung des Strahlmittels mit Reinigungsflüssigkeit eingebunden und
b) der Austrittsstutzen des Aggregates für die Abluft ist über eine Kühl- und Heizeinrichtung mit der Unterdruck-Zuleitung zu- und abschaltbar verbunden.
a) die Unterdruck-Zuleitung ist mit einem, eine Beschleunigungsstrecke bildenden geradlinig verlaufenden Beschleunigungsrohr verbunden, das der Strahllanze vorgeordnet ist und gegenüber der Zuleitung eine weitere Durchmesserverringerung aufweist;

Die Unterdruck-Zuleitung ist in weiterer bevorzugter Ausgestaltung der erfindungsgemäßen Vorrichtung mit einem, eine Beschleunigungsstrecke bildenden geradlinig verlaufenden Beschleunigungsrohr verbunden, das der Strahllanze vorgeordnet ist, wobei das Beschleunigungsrohr sich über eine Länge des 5 bis 50fachen Innendurchmessers d1 der Unterdruck-Zuleitung erstreckt und einen Innendurchmesser d2 aufweist, der das 0,1 bis 0,9fache des Innendurchmessers d1 der Unterdruck-Zuleitung beträgt.

Das Beschleunigungsrohr kann jedoch auch nach einer bevorzugten alternativen Ausführungsform direkt an die Dosiereinrichtung und/oder den Injektor angeschlossen sein. Es muss lediglich gewährleistet bleiben, dass eine geradlinige Beschleunigungsstrecke von ausreichender Länge vorhanden ist, die es dem Strahlmittel erlaubt, die erforderliche Strahlgeschwindigkeit anzunehmen.
Die Länge der Beschleunigungsstrecke kann variabel ausgeführt sein, in dem ein ausziehbares Teleskoprohr das Beschleunigungsrohr bildet.

Die in die Strahlkammer hineinreichende Strahllanze ist in weiterer Ausgestaltung der Erfindung in einem Kegel von annähernd 90° innerhalb der Strahlkammer verschwenkbar und auf unterschiedliche Strahlabstände einstellbar angeordnet. Die Verschwenkbewegung der Strahlanze ist des weiteren durch eine Beleuchtung von außen einsehbar beobachtbar, so dass auch Problemstellen individuell behandelt werden können.

Eine weitere zweckmäßige Ausführungsform der Erfindung sieht vor, dass der Behälter für die Bevorratung des Strahlmittels mit einer zur Atmosphäre hin geöffneten Fremdbelüftung versehen ist.

Die Strahlkammer ist mit einem Trichter versehen, der das von der Behandlungsfläche abspringende Strahlmittel sammelt und dafür sorgt, dass das Strahlmittel über den Absaugstutzen in die Unterdruck-Ableitung gelangt.

In weiterer Ausgestaltung der erfindungsgemäßen Vorrichtung besteht die Strahlkammer aus einer einseitig offenen, einen Sammeltrichter aufweisenden Strahlglocke, deren offene Seite auf die Behandlungsfläche dichtend und bei anliegendem Unterdruck auf dieser verschiebbar aufgesetzt angeordnet ist.

In weiterer zweckmäßiger Ausgestaltung der Erfindung ist der offenen Seite der Strahlglocke eine Ansaugplatte zur Abdichtung einer mit Öffnungen versehenen Strahlfläche zugeordnet.

Wenn beispielsweise ein Drahtgeflecht von Lack- und Rostbeschichtungen befreit werden soll, ist die Ansaugplatte flexibel ausgebildet. Die Ansaugplatte besitzt eine Abdeckschicht aus geschlossenzelligem Schaumgummi. Die offene Seite der Strahlglocke wird auf das Drahtgeflecht aufgesetzt und mit der Ansaugplatte abgedeckt. Bei Anlegen des Unterdruckes legt sich die Abdeckschicht der Ansaugplatte dichtend auf das Drahtgeflecht und den Glockenwänden, so dass die Strahlglocke evakuiert wird. Das Drahtgeflecht ist somit einfach und vorteilhaft zu behandeln.

Nach einer weiteren vorteilhaften Ausgestaltung der erfindungsgemäßen Vorrichtung sind die auf die Behandlungsfläche aufgesetzten Glockenwände mit Dichtelementen versehen, die bei Unterdruckbeaufschlagung den Innenraum der Strahlglocke gegen den äußeren Atmosphärendruck sicher abdichten.
Die Dichtelemente bestehen vorzugsweise aus geschlossenzelligem Schaumgummi, Folien, Bürsten, Gummilippen, gefüllten Dichtelementen, Schläuchen aus Latex, Gummi oder Profildichtungen, die sich den Unebenheiten des Untergrundes leicht anpassen.

Zweckmäßig ist es weiterhin, dass diese Dichtelemente von der Stirnfläche der Glockenwand abnehmbar sind, damit bei unterschiedlichen Oberflächenbeschaffenheiten ein problemloses Auswechseln möglich ist.

In einem weiteren Merkmal besitzt die auf ebene Behandlungsflächen aufsetzbare Strahlglocke Wände, deren Stirnflächen zueinander eben ausgebildet sind.
Für Problembereiche wie Ecken, Kanten oder gekrümmten Behandlungsflächen sind diese Wände zueinander konvex, konkav oder V-förmig ausgebildet oder mit Gelenken versehen, die sich an unterschiedliche Oberflächenbeschaffenheiten leicht anpassen.
Dies macht den Einsatz der erfindungsgemäßen Vorrichtung für Ecken- und Kantenbereiche besonders effektiv.

Eine weitere bevorzugte Ausführungsform der erfindungsgemäßen Vorrichtung sieht eine geschlossene Strahlkammer vor, die aus einer stationär oder beweglich aufgestellten Haube und einem an die Haube angesetzten,
einen Absaugstutzen aufweisenden Sammeltrichter zusammengesetzt ist, und dass in der Anschlußebene zwischen Haube und Trichter ein Strahltisch angeordnet ist.

Für die Bearbeitung von Werkstücken aus Kunststoff oder Metall ist in einem bevorzugten Merkmal dieser Art Strahlkammer der Strahltisch ein Drehteller, dessen Antriebsachse in der Trichterachse geführt und mit einem am Absaugstutzen befestigten Antrieb verbunden ist.
Es gehört natürlich zu der weiteren Ausgestaltung der Erfindung, wenn der Strahltisch ein Schwenkteller ist, der um eine in der Anschlußebene liegende Achse schwenkbar ist.
Mit einem derartig drehbar oder schwenkbar ausgebildeten Strahltisch lassen sich spezielle Werkstücke mit komplizierter Oberflächenstruktur und Form schnell und problemlos bearbeiten.

Beschleunigungsrohr und Strahllanze sind in bevorzugter Ausgestaltung der erfindungsgemäßen Vorrichtung voneinander lösbar ausgebildet. Dies hat den Vorteil, dass Beschleunigungsrohre mit unterschiedlicher Länge und unterschiedlichen Innendurchmessern verwendet werden können, so dass je nach Art des Untergrundes, der Beschichtung und der Strahlmittel die notwendigen Strahlgeschwindigkeiten dosiert eingestellt werden können.

Strahllanze und Beschleunigungsrohr können aber auch einstückig ausgebildet sein. Dies ist mit dem Vorteil verbunden, dass die Strahllanze für die Länge der Beschleunigungsstrecke ausnutzbar ist und die Baulänge verkürzt werden kann. Es müssen dann aber Strahllanzen mit unterschiedlicher Baulänge und unterschiedlichem Innendurchmesser zur Verfügung stehen.

Nach einem weiteren bevorzugten Merkmal der erfindungsgemäßen Vorrichtung ist die der Behandlungsfläche zugewandte Öffnung der Strahllanze mit einer Düse versehen, die auswechselbar ist.
Je nach Untergrundbeschaffenheit und Art der Beschichtung bzw. Verschmutzung können unterschiedliche Düsengrößen auf der Strahllanze aufgesetzt werden, so dass die Beladung mit Strahlmittel im Tragluftstrom entsprechend variierbar ist.

Die Strahllanze ist durch eine Öffnung in der Strahlglockenwand geführt, in dieser abgedichtet gehaltert und verschwenkbar gelagert.

Dies kann nach einer bevorzugten Ausgestaltung durch ein in der Öffnung der Strahlkammerwand angeordnetes abgedichtetes Kugelgelenk ebenso wie durch eine die Öffnung umgebende, auf die Vorderwand der Strahlkammer angeflanschte Dichtung, vorzugsweise einen Simmering, geschehen.

Ein weiteres zweckmäßiges Merkmal sieht vor, dass die Strahllanze mit einem Anschlag versehen ist, der es erlaubt, den Strahlabstand der Strahllanzenöffnung bzw. Strahllanzendüse von der Behandlungsfläche zu verändern. Der Anschlag ist mit Vorteil auf der Strahllanze verschieb- und feststellbar angeordnet ist, so dass der erforderliche Strahlabstand exakt eingestellt werden kann.

Zweckmäßig kann es sein, die Strahllanze mit der Hand zu führen oder das Werkstück entsprechend zu drehen.
In weiterer bevorzugter Ausgestaltung der erfindungsgemäßen Vorrichtung ist die Strahlkammer mit einem Sichtbereich, vorzugsweise einem Sichtfenster, versehen, der eine Beobachtung der Bewegung der Strahllanze und damit des Strahlvorganges im Innenraum der Strahlglocke ermöglicht. Das Sichtfenster befindet sich entweder oberhalb oder unterhalb der Strahllanze. Zweckmäßig ist es, wenn das Sichtfenster aus Glas oder Acrylglas besteht.
Alternativ kann natürlich die gesamte Strahlglocke aus durchsichtigem schlagzähen Kunststoff bestehen, so dass ein gesondertes Sichtfenster entfallen kann.

Für den Fall, dass eine stationäre Strahlkammer zur Anwendung kommt, besitzt diese eine entsprechende gegen die Atmosphäre abdichtende Beschickungsöffnung.
Geeignete unterdruckerzeugende Aggregate sind Naß- und/oder Trockensauger, Pumpen, Verdichter oder Gebläse, die nach einem bevorzugten weiteren Merkmal der Erfindung auf dem Behälter angeordnet und mit diesem direkt in Verbindung steht. Es ist aber auch möglich, das unterdruckerzeugende Aggregat in die Unterdruck-Ableitung einzubinden, ohne die Erfindung zu verlassen.

Zweckmäßigerweise sind der Behälter für die Bevorratung des Strahlmittels und der Behälter für die Ausschleusung des Strahlmittels aus dem Luft-Staub-Strahlmittelgemisch durch den Schütt-Trichter des letzteren voneinander getrennt. Mit einem in der Öffnung dieses Schütt-Trichters angeordneten Schieber, Ventil oder einer Klappe, Blende, Schnecke bzw. Zellradschleuse kann die Öffnung im Schütt-Trichter verschlossen werden, um beide Behälter pneumatisch voneinander zu trennen.

Damit nach einer weiteren vorteilhaften Ausgestaltung der erfindungsgemäßen Vorrichtung das aus dem Tragluftstrom ausgeschleuste Strahlmittel ohne Verstopfung durch die Schwerkraft in den Behälter für die Bevorratung und von dort in die Unterdruck-Zuleitung gelangt, besitzen die Schütt-Trichter in beiden Behältern einen Öffnungswinkel von 30° bis 120°, vorzugsweise 90°.
Natürlich gehört es auch zu den Merkmalen der erfindungsgemäßen Vorrichtung, wenn beide Behälter ein gemeinsames Gehäuse aufweisen, das nur durch den Schütt-Trichter in den Ausschleusungsraum und den Bevorratungsraum getrennt ist.

Je nach Art und Beschaffenheit des Untergrundes, der Beschichtung und der Strahlmittel kann durch die Kühl- und Heizeinrichtung auch eine Temperatureinwirkung bei der Bearbeitung erzielt werden.

Mit dem erfindungsgemäßen Verfahren und der Vorrichtung lassen sich Bemalungen, Farbaufsprühungen und Graffiti besonders effektiv beseitigen.
Der Wegfall des gesamten Überdruck- bzw. Hochdruckerzeugungssystems für die Druckluft führt zu erheblichen Einsparungen an aufzuwendender Energie.

Das erfindungsgemäße Verfahren ist außerdem sehr einfach durchzuführen, weil der Strahlvorgang an der Behandlungsstelle beobachtbar ist. Die Zudosierung des Strahlmittels kann in Abhängigkeit der Beschichtung und des Untergrundes eingestellt werden, so dass auch sehr dünne Beschichtungen ohne Zerstörung des Untergrundes problemlos entfernt werden können.

Diese Feinfühligkeit des Energieeintrages durch das erfindungsgemäße Verfahren ermöglicht es, neben den bereits genannten Anwendungsfällen auch Restaurierungen an ebenen oder gekrümmten Flächen vorzunehmen. Ebenso sind Überzüge aus Kunststoff, Leder oder dichten imprägnierten Textilien mit dem erfindungsgemäßen Verfahren behandelbar.

Die Vorrichtung ist kompakt aufgebaut, bedienungsfreundlich und durch den Einsatz handelsüblicher Komponenten wie beispielsweise einem Naß-Trockensauger äußerst flexibel.

Mit all diesen Merkmalen wird erreicht, dass die erfindungsgemäße Lösung den komplexen Anforderungen an die Entfernung von Beschichtungen auf unterschiedlichen Flächen mit hoher Effektivität, Sicherheit, Wartungsfreundlichkeit, Übersichtlichkeit und Kompaktheit besser gerecht wird.

Weitere Vorteile und Einzelheiten ergeben sich aus der nachfolgenden Beschreibung unter Bezugnahme auf die beigefügten Zeichnungen.

Die Erfindung soll nachstehend an einem Ausführungsbeispiel näher erläutert werden.

Es zeigen:
- Fig. 1: ein Funktionsschema des erfindungsgemäßen Verfahrens,
- Fig. 2: einen Längsschnitt durch die Strahlglocke mit Beschleunigungsrohr und Strahllanze,
- Fig. 3: einen Schnitt entlang der Linie A-A durch die Strahlglocke nach Fig. 2,
- Fig. 4: die tangentiale Einbindung der Unterdruck- Zuleitung in den Behälter,
- Fig. 5: eine Darstellung der erfindungsgemäßen Vorrichtung mit geschlossener Strahlkammer und Benetzungseinrichtung,
- Fig. 6: eine Ausführungsvariante gemäß Fig. 5 mit zusätzlicher Heiz- oder Kühleinrichtung für den Ablauftstrom und
- Fig. 7: eine perspektivische Ansicht der Ansaugplatte mit Drahtgeflecht und Strahlglocke.

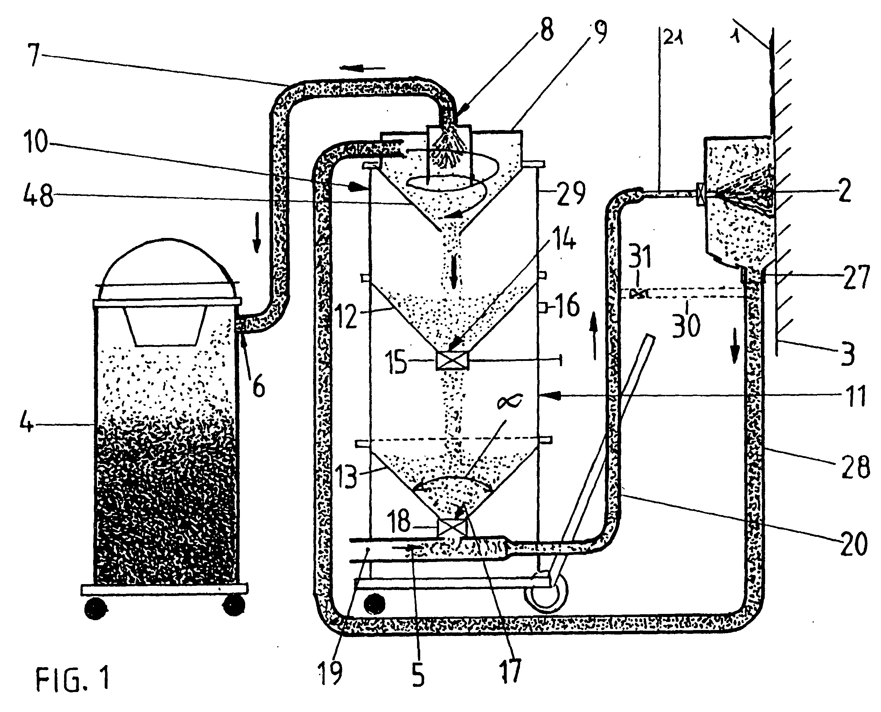

Die Figur 1 zeigt ein Funktionsschema des erfindungsgmäßen Verfahrens zur Entfernung einer Graffiti-Beschichtung **1** mittels trockenem Strahlmittel **2** auf einer ebenen Wandfläche **3**.
Als Strahlmittel **2** wird Natriumhydrogencarbonat (Backpulver) verwendet.
Mit einem handelsüblichen dreistufigen Naß-Trockensauger **4** wird ein Tragluftvolumenstrom **5** mit einer Luftleistung von ca. 230 m³/h erzeugt. Der Saugstutzen **6** des Nass-Trockensaugers **4** ist mit einer Saugleitung **7** verbunden, die über einen Anschluss **8** mittig im Dach **9** eines Behälters **10** einbindet und in diesem ein Unterdruck von ca. 80 mbar erzeugt. Der Behälter **10** ist auf den Behälter **11** für die Bevorratung des Strahlmittels **2** in vertikaler Flucht
aufgesetzt. In beiden Behältern **10** und **11** sind die Behälterböden durch einen konischen Schütt-Trichter **12** bzw. **13** mit einem Öffnungswinkel α von jeweils 90° gebildet.
In der Öffnung **14** des Schütt-Trichters **12** befindet sich ein Schließorgan **15**, in diesem Ausführungsbeispiel ein Schieber, der den Behälter **10** vom Behälter **11** pneumatisch abschottet.
Der Behälter **11** hat eine zur Außenatmosphäre hin geöffnete Fremdbelüftung **16**, so dass bei geöffnetem Schieber **15** das Strahlmittel **2** durch seine Schwerkraft in den darunter befindlichen Schütt-Trichter **13** des Behälters **11** fallen kann.
An die Öffnung **17** des Schütt-Trichters **13** ist in vertikaler Flucht eine Dosiereinrichtung **18** mit horizontal liegendem Injektor **19** angeschlossen, der mit der Unterdruck-Zuleitung **20** verbunden ist. Das Strahlmittel **2** fällt durch seine Schwerkraft über die Dosiereinrichtung **18** in den Injektor **19**, wird durch den anliegenden Unterdruck zusätzlich angesaugt und strömt zusammen mit dem Tragluftvolumenstrom als Tragluft-Strahlmittel-Gemisch in der flexiblen Unterdruck-Zuleitung **20** einem starren geradlinig verlaufenden Beschleunigungsrohr **21** zu. Die durch Schwerkraft und Unterdruck zudosierte Menge an Strahlmittel beträgt 0,013% des Tragluftvolumenstromes.
Das Beschleunigungsrohr **21** hat einen Innendurchmesser **d2** von 20 mm, die Unterdruck-Zuleitung **20** einen Innendurchmesser **d1** von 32 mm, so dass eine Querschnittsverringerung
von der Unterdruck-Zuleitung **20** zum Beschleunigungsrohr **21** erfolgt. Das Durchmesserverhältnis **d2:d1** beträgt für das hier gewählte Beispiel 0,625.
Das Beschleunigungsrohr **21** bildet eine Beschleunigungsstrecke **L**, in der die Strahlteilchen des Strahlmittels **2** auf eine Strahlgeschwindigkeit von etwa 60 m/s beschleunigt werden. Die Beschleunigungsstrecke **L** hat für diesen Anwendungsfall eine Länge von 60 cm.
Das Beschleunigungsrohr **21** ist mit einer Strahllanze **22** lösbar verbunden. Die Strahllanze **22** trägt an ihrer der Behandlungsfläche zugewandten Öffnung **23** eine Düse **24**, durch die das Strahlmittel-Tragluftgemisch auf die Behandlungsfläche gelenkt wird.
Die Strahllanze **22** führt in eine als Glocke ausgebildete Strahlkammer **25**, die die Behandlungsfläche auf der Wand gegen die Atmosphäre abschottet.
In der Strahlkammer **25** liegt demzufolge ein entsprechender Unterdruck an, der ausreicht, dass die Strahlkammer **25** mit ihren Wänden **26** auf der Behandlungsfläche angesaugt wird.
Die Strahlkammer **25** besitzt einen trichterartigen Absaugstutzen **27**, an dem eine flexible Unterdruck-Ableitung **28** angeschlossen ist. Die Unterdruck-Ableitung **28** führt zurück in den Behälter **10** und bindet in diese ein. Damit ist Kreislauf geschlossen.
Das Strahlmittel-Luftgemisch wird durch die Unterdruck-Zuleitung **20** befördert, in der Beschleunigungsstrecke **L** soweit beschleunigt, dass die Strahlteilchen eine für die schonende Ablösung der Beschichtung ausreichende Energie erhalten, strömt dann durch Strahllanze **22** und wird durch die Düse **24** zielgerichtet auf die Behandlungsfläche geschleudert. Das mit Staub und abgelösten Beschichtungsteilchen versetzte Strahlmittel-Luftgemisch strömt anschließend durch die Unterdruck-Ableitung **28** in den Behälter **10** zurück, und wird dort tangential entlang des Behältermantels **29** in den Abscheider **48** des Behälters **10** eingesaugt. Das beladene kontaminierte Strahlmittel-Luftgemisch wird dadurch in Rotation versetzt. Da die Strahlteilchen des Strahlmittels eine weitaus höhere Masse aufweisen und damit höhere Energie haben, fallen die Strahlteilchen am inneren Behältermantel **29** herunter und in den Schütt-Trichter **12** und sammeln sich dort.
Der dann noch mit feinsten Staub- oder Beschichtungsteilchen kontaminierte Tragluftvolumenstrom wird durch die Saugleitung **7** angesaugt. Staub und Beschichtungsteilchen werden im Naß-Trockensauger abgeschieden und der gereinigte Tragluftvolumenstrom in den Kreislauf zurückgeführt.
Für den Fall, dass die Strahlkammer **25** umgesetzt werden muss oder die Unterdruck-Zuleitung **20** und/oder die Unterdruck-Ableitung **28** verstopfen, sind beide Leitungen unter Umgehung der Strahlkammer **25** durch eine Leitung **30** kurzgeschlossen. Die Leitung **30** ist dazu an ihren Einbindungsstellen mit Absperrventilen **31** versehen.

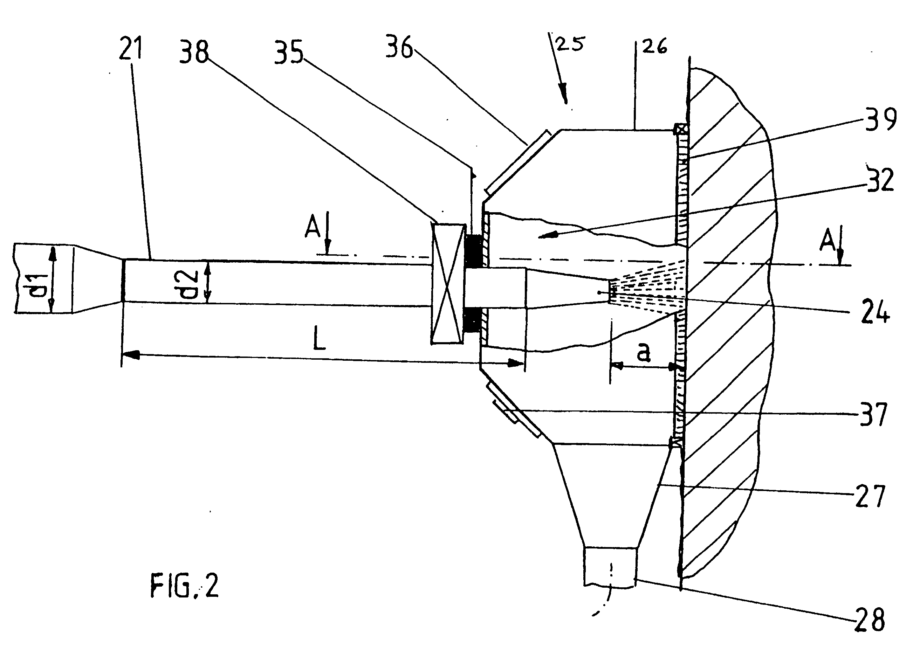

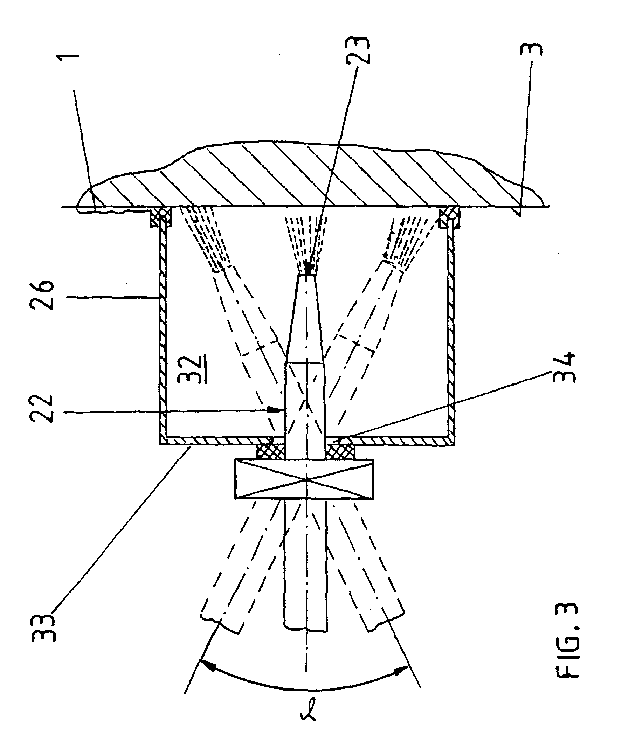

Fig. 2 zeigt einen Schnitt durch die Stahlkammer **25**. Die glockenförmige Kammer **25** besteht aus einem schlagzähem Kunststoff, beispielsweise Polyamid.
Die Stirnseiten ihrer Wände **26** sind mit Dichtelementen **39** aus geschlossenzelligem Schaumstoff versehen, die sich bei Anlegen eines Unterdruckes dicht an die Wand anpressen, so dass sich im Innenraum **32** der Strahlkammer **25** ein entsprechender Unterdruck einstellt.
In der Vorderwand **33** der Stahlkammer **25** ist eine Öffnung **34** eingearbeitet, durch die die Strahllanze **22** mit aufgesetzter Düse **24** abgedichtet hindurchgeführt ist. Die Strahllanze **22** ist von einer Dichtung **35** umschlossen, die ihrerseits die Öffnung **34** umgrenzende Vorderwand **33** umschließt. Die Dichtung **35** ist so elastisch, dass der Strahllanze **22** zusammen mit dem Beschleunigungsrohr **21** eine begrenzte kegelförmige Pendelbewegung innerhalb des Innenraumes **32** der Strahlglocke **25** erteilt werden kann, ohne das Vakuum im Innenraum der Strahlglocke **25** zu brechen (s. Fig. 3). Der Öffnungswinkel γ des Kegels beträgt etwa 90°.

Die Hin- und Herbewegung der Strahllanze **22** innerhalb der Strahlglocke **25** ist durch ein Sichtfenster **36** beobachtbar. Das Sichtfenster **36** befindet sich über der Durchführungsöffnung **34** der Strahllanze **22** in der Vorderwand **33** der Strahlkammer **25** und besteht aus Glas.
Damit die Strahlkammer **25** von einer Behandlungsstelle zu einer anderen Behandlungsstelle umgesetzt werden kann, ist in der Wand **26** ein Belüftungsventil **37** angeordnet, durch das bei kurzgeschlossener Zuleitung **20** und Ableitung **28** die Strahlkammer **25** belüftbar ist.
Auf die Strahllanze **22** ist ein Anschlag **38** aufgeschoben und arretiert, mit der der Abstand **a** der Strahllanze **22** incl. Düse **24** von der Behandlungsfläche einstellbar ist.
Je nach Untergrundbeschaffenheit, der Art der zu entfernenden Beschichtung lässt sich somit der Strahlabstand a genau einstellen.

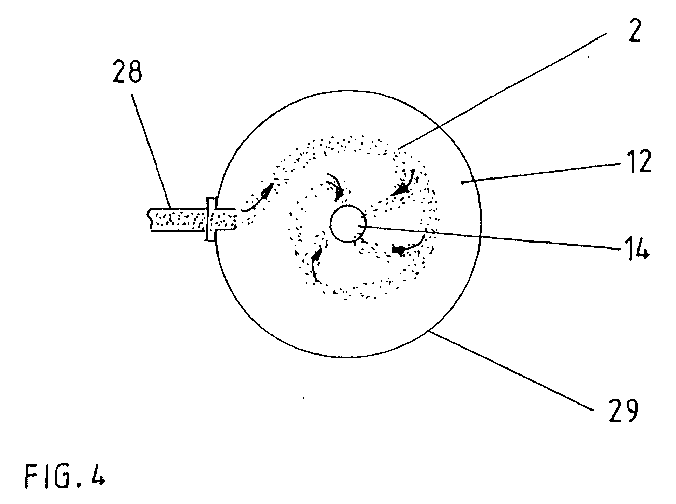

Fig. 4 zeigt die tangentiale Einbindung der Unterdruck-Ableitung **28** in den Innenraum des Behälters **10**.

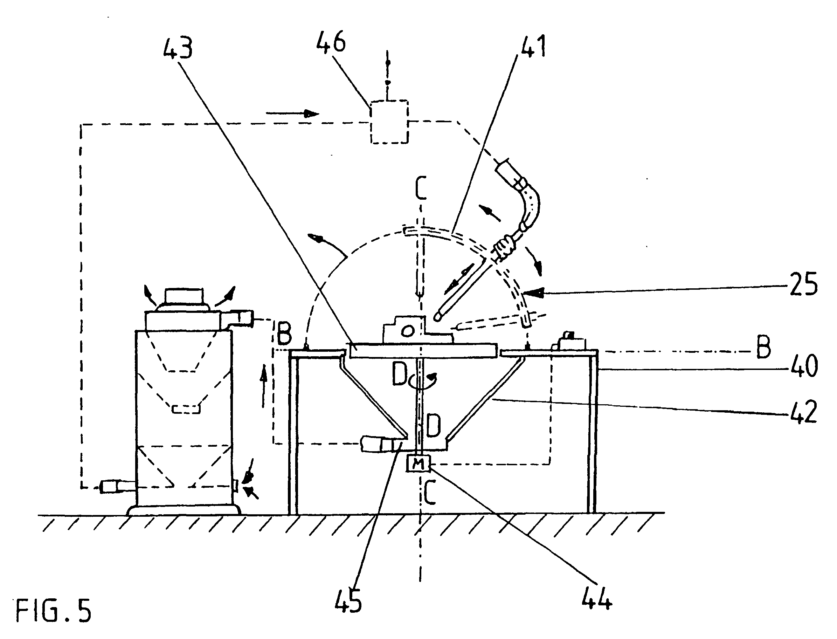

In der Fig. 5 ist eine stationäre Variante der erfindungsgemäßen Vorrichtung gezeigt. Das Beschleunigungsrohr **21** und die Strahllanze **22** ist hierbei einstückig ausgebildet. Die Strahlkammer **25** ist auf einem Tisch **40** montiert und besteht aus einer halbkugelförmigen Haube **41** und einer an der Haube **41** angesetzten Sammeltrichter **42**. In der Anschlußebene **B-B** von Haube **41** und Sammeltrichter **42** befindet sich ein Strahltisch **43** in Form eines Drehtellers. Die Antriebsachse **C-C** des Strahltisches **43** ist in der Trichterachse **D-D** geführt, durchstößt den Sammeltrichter **42** und ist außenseitig am Sammeltrichter mit einem Antrieb **44**, beispielsweise einem Elektromotor verbunden. Am Sammeltrichter **42** befindet sich senkrecht zur Trichterachse **D-D** ein Absaugstutzen **45**, an dem die Unterdruck-Ableitung **28** angeschlossen ist. Die Unterdruck-Ableitung **28** ist mit dem Aggregat **4** verbunden, das auf dem Kopf des Behälters **10** befestigt ist. In die Unterduck-Zuleitung **20** ist vor dem Beschleunigungsrohr **21** stromabwärts gelegen eine Benetzungseinrichtung **46** eingebunden, die eine Reinigungsflüssigkeit auf das Strahlmittel gibt.

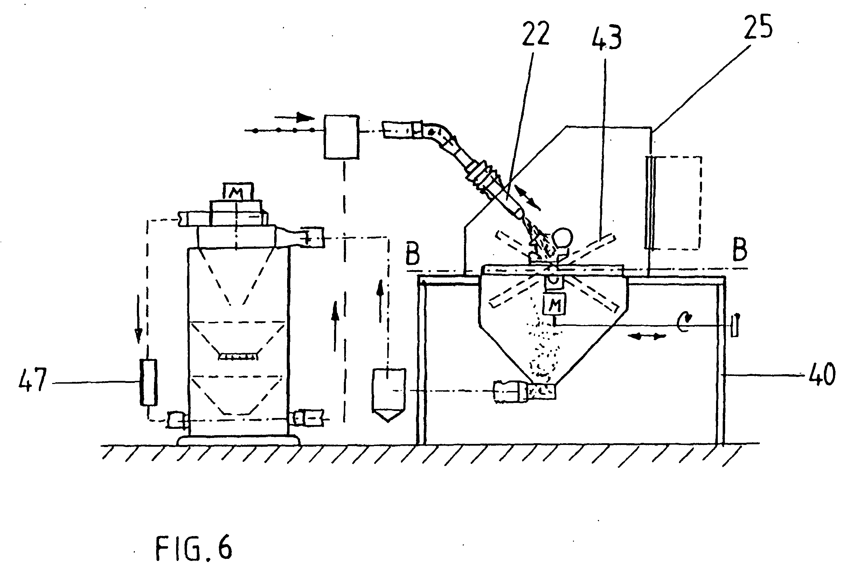

Fig. 6 stellt eine weitere stationäre Variante der erfindungsgemäßen Vorrichtung dar. Die Strahlkammer **25** besitzt hier einen schwenkbaren Strahltisch **43**, dessen Schwenkachse in der Anschlußebene **B-B** gelegen ist. Angetrieben ist der Strahltisch durch einen im Sammeltrichter **42** angeordneten Antrieb **44**, der die Drehbewegung des Motors in eine Pendelbewegung umsetzt.
Gegenüber der Variante nach Fig. 5 wird die Abluft des Aggregates **4** über eine Heiz- bzw. Kühleinrichtung **47** der Unterdruck-Zuleitung **20** zurückgeführt.

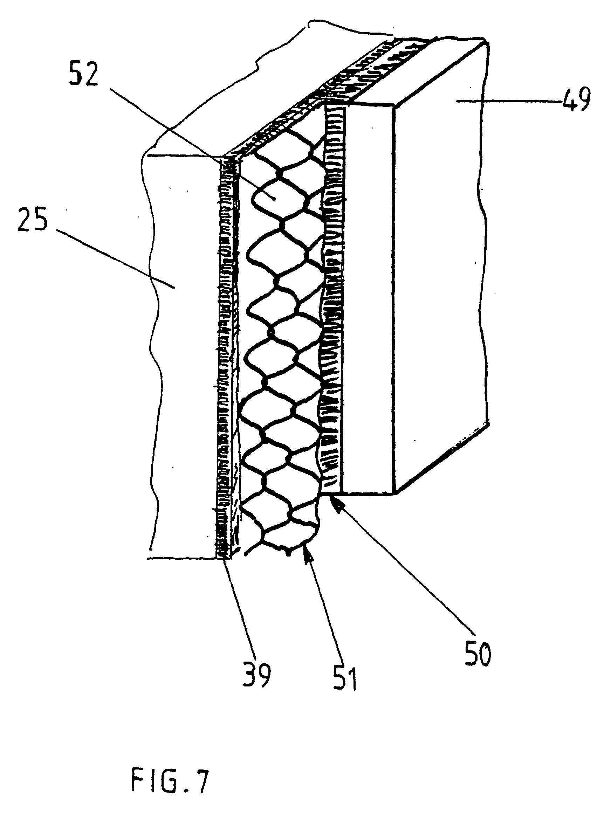

In Fig. 7 ist eine flexible Ansaugplatte **49** gezeigt, die eine mit Öffnungen **52** versehene Fläche **51** (Drahtgeflecht)gegenüber der Strahlglocke **25** abdeckt. Die Ansaugplatte **49** ist mit einer Abdichtschicht **50** versehen, die durch den angelegten Unterdruck in der Strahlglocke **25** gegen die Wände der Strahlglocke abdichtet. Das Drahtgeflecht kann dann problemlos mit Strahlmittel beaufschlagt werden.

### Aufstellung der verwendeten Bezugszeichen

| | |
|---|---|
| Beschichtung | 1 |
| Strahlmittel | 2 |
| Wandfläche | 3 |
| Naß-Trockensauger | 4 |
| Tragluftvolumenstrom | 5 |
| Saugstutzen | 6 |
| Saugleitung | 7 |
| Anschluß | 8 |
| Dach von 10 | 9 |
| Behälter | 10 |
| Behälter für Bevorratung | 11 |
| Schütt-Trichter von 10 | 12 |
| Schütt-Trichter von 11 | 13 |
| Öffnung in 12 | 14 |
| Schließorgan/Schieber in 14 | 15 |
| Fremdbelüftung | 16 |
| Öffnung in 13 | 17 |
| Dosiereinrichtung | 18 |
| Injektor | 19 |
| Unterdruck-Zuführung | 20 |
| Beschleunigungsrohr | 21 |
| Strahllanze | 22 |
| Öffnung in der Strahllanze | 23 |
| Düse | 24 |
| Strahlkammer | 25 |
| Wände von 25 | 26 |
| Absaugstutzen | 27 |
| Unterdruck-Ableitung | 28 |
| Behältermantel von 10 | 29 |
| Kurzschlußleitung | 30 |
| Absperrventil | 31 |
| Innenraum von 25 | 32 |
| Vorderwand von 25 | 33 |
| Öffnung in 33 | 34 |
| Dichtung | 35 |
| Sichtfenster | 36 |
| Belüftungsventil | 37 |
| Anschlag | 38 |
| Dichtelemente | 39 |
| Tisch | 40 |
| Haube | 41 |
| Sammeltrichter | 42 |
| Strahltisch | 43 |
| Antrieb | 44 |
| Ansaugstutzen | 45 |
| Benetzungseinrichtung | 46 |
| Heiz-oder Kühleinrichtung | 47 |
| Abscheider | 48 |
| Ansaugplatte | 49 |
| Beschichtung von 49 | 50 |
| Drahtgeflecht | 51 |
| Öffnungen von 51 | 52 |
| Anschlußebene | B-B |
| Antriebsachse | C-C |
| Trichterachse | D-D |
| Strahlabstand | a |
| Beschleunigungsstrecke | L |
| Innendurchmesser der Schlauchzuleitung | d1 |
| Innendurchmesser des Beschleunigungsrohrs | d2 |
| Öffnungswinkel der Schütt-Trichter | α |
| Winkel der Pendelbewegung | γ |

## Patentansprüche

1. Verfahren zum Bearbeiten, insbesondere Reinigen, Abtrennen von Beschichtungen, Graffiti oder sonstigen oberflächlichen Verunreinigungen auf Teilen bzw. Werkstücken oder Flächen aus Stein, Beton, Holz, Metall, Kunststoff, Glas, Keramik oder Papier, bei dem ein Strahlmittel durch Schwerkraft aus einem Bevorratungsbehälter in einen innerhalb eines aus Zu- und Ableitungen gebildeten Schlauchleitungssystems geführten Tragluftstrom eingebracht, mittels Unterdruck durch diesen befördert, und gegen die zu behandelnde Fläche in einer Strahlkammer durch eine Strahllanze geschleudert, von dort in den Tragluftstrom so zurückbefördert wird, dass das Strahlmittel im Kreislauf gefahren wird, wobei die Beschleunigung des Strahlmittels im wesentlichen durch den an der Strahlkammer anliegenden Unterdruck und durch die Erhöhung der Strahlgeschwindigkeit mittels Durchmesserverringerung von der Zuleitung auf die Strahllanze erzeugt wird, **dadurch gekennzeichnet, dass** der Unterdruck im Kreislauf auf 50 bis 300 mbar eingestellt, das Strahlmittel dem Tragluftvolumenstrom in einer auf den Tragluftvolumenstrom bezogenen Menge von 0,01 bis 25,0% mit oder ohne Reinigungsflüssigkeit zudosiert, der Energieeintrag auf die zu bearbeitenden Teile mittels Einstellung der Strahlgeschwindigkeit des Strahlmittels von 20 bis 80 m/s durch Durchmesserverringerung in Abhängigkeit der zu entfernenden Beschichtungen gesteuert, sodann das Strahlmittel-Luftgemisch mit einer sich rhythmisch wiederholenden Hin- und Herbewegung über die Behandlungsfläche hinweg unter Beobachtung gerichtet oder die Behandlungsfläche im Strahlmittel-Luftgemisch in Rotation versetzt und/oder verschwenkt wird, das Strahlmittel nach seiner Abtrennung und Sammlung ggf. getrocknet und das verbleibende Kontamination-Luftgemisch einer Feinreinigung im Naß- und/oder Trockensauger unterworfen wird, und dass Frischluft und/oder wahlweise die abgetrennte Luft alsdann gekühlt oder aufgeheizt dem Unterdruck-Kreislauf erneut zugeführt wird.

2. Verfahren nach Anspruch 1, **dadurch gekennzeichnet, dass** die Beschleunigung in einer geradlinig verlaufenden Beschleunigungsstrecke innerhalb der Unterduck-Zuleitung durchgeführt wird.

3. Verfahren nach Anspruch 1 und 2, **dadurch gekennzeichnet, dass** die Beschleunigung der Strahlmittel durch eine Durchmesserverringerung des Beschleunigungsrohres auf das 0,1 bis 0,9fache des Durchmessers **(d1)** der Unterdruck-Zuleitung **(20)** über eine Länge des 5 bis 50fachen Innendurchmessers **(d2)** der durchmesserverringerten Unterdruck-Zuleitung **(20)** eingestellt wird.

4. Verfahren nach Anspruch 3, **dadurch gekennzeichnet, dass** die Strahlgeschwindigkeit der Strahlmittel bei konstantem Volumenstrom aus Luft und Strahlmittel durch Veränderung der Durchmesserverhältnisse **(d2:d1)** und/oder der Länge **(L)** der Beschleunigungsstrecke und/oder des Strahlabstandes **(a)** der Strahllanze **(22)** mit der Düse **(24)** von der Behandlungsfläche und der Rotationsgeschwindigkeit der Behandlungsfläche gesteuert wird.

5. Verfahren nach Anspruch 4, **dadurch gekennzeichnet, dass** der Strahlabstand **(a)** etwa das 0,1 bis 1,0fache des Innendurchmessers **(d2)** des Beschleunigungsrohres beträgt.

6. Verfahren nach Anspruch 1 bis 5, **dadurch gekennzeichnet, dass** die Beschleunigung vor Eintritt in die Strahlkammer in einem eine Beschleunigungsstrecke **(L)** bildenden Beschleunigungsrohr durchgeführt wird.

7. Verfahren nach Anspruch 1 bis 6, **dadurch gekennzeichnet, dass** die Beschleunigungsstrecke **(L)** bis in die Strahlkammer hineinreicht.

8. Verfahren nach Anspruch 1 bis 7, **dadurch gekennzeichnet, dass** die Hin-und Herbewegung des Strahlmittel-Luftgemisches mittels einer Pendel- und/oder Schwenkbewegung der Strahllanze durchgeführt wird.

9. Verfahren nach Anspruch 1, **dadurch gekennzeichnet, dass** die Strahlkammer auf die zu bearbeitende Fläche dichtend aufgesetzt, durch den Unterdruck evakuiert und nach Bearbeitung von der behandelten Fläche zu einer unbehandelten Fläche verschoben wird.

10. Verfahren nach Anspruch 9, **dadurch gekennzeichnet, dass** die Verschiebebewegung bei anliegendem Unterdruck durchgeführt wird.

11. Verfahren nach Anspruch 9, **dadurch gekennzeichnet, dass** die Verschiebebewegung bei kurzgeschlossenem Kreislauf (K) unter Atmosphärendruck durchgeführt wird.

12. Verfahren nach Anspruch 1, **dadurch gekennzeichnet, dass** zur Unterdruckerzeugung im offenen Kreislauf **(K)** Naß- und/oder Trockensauger, Pumpen, Verdichter oder Gebläse verwendet werden.

13. Verfahren nach Anspruch 1 bis 12, **dadurch gekennzeichnet, dass** ein Tragluftvolumenstrom von etwa 150 bis 400 m³/h, vorzugsweise 230 m³/h, eingestellt wird.

14. Verfahren nach Anspruch 1 bis 13, **dadurch gekennzeichnet, dass** die unterdruckerzeugenden Aggregate ein- oder mehrstufig ausgelegt sind.

15. Verfahren nach einem oder mehreren der vorherigen Ansprüche, **dadurch gekennzeichnet, dass** die Zudosierung des Strahlmittels in den Tragluftvolumenstrom auf vorzugsweise 0,013% des Tragluftvolumenstromes eingestellt wird.

16. Verfahren nach einem oder mehreren der vorherigen Ansprüche, **dadurch gekennzeichnet, dass** als Strahlmittel Natriumhydrogencarbonat, Kunststoffteilchen, vorzugsweise Duroplastteilchen, Asche, zerkleinerte feinkörnige Schlacke, Korund, Quarz, metallische Teilchen, Glasperlen, pflanzliche/organische Teilchen oder deren Gemische verwendet werden.

17. Vorrichtung zur Durchführung des Verfahrens nach Anspruch 1, mit einem an seinem unteren Ende konisch als Schütt-Trichter **(13)** mit Auslauföffnung **(14)** ausgebildeten Behälter **(11)** für die Bevorratung eines fein- und/oder grobkörnigen Strahlmittels, das durch seine Schwerkraft in die Auslaßöffnung des Schütt-Trichters gelangt, welche an eine flexible Zuleitung **(20)** zum Transport des Strahlmittels in eine mit einem Unterdruck erzeugenden Aggregat **(4)** evakuierbare, die Teile oder Flächen aufnehmende Strahlkammer **(25)** angeschlossen ist, die ihrerseits mit einer Unterdruck-Ableitung **(28)** verbunden ist, die mit mindestens einem auf dem Schütt-Trichter **(13)** des Behälters **(11)** angeordneten weiteren Behälter **(10)** verbunden ist, der seinerseits einen konisch ausgebildeten Schütt-Trichter **(12)** aufweist und mit dem unterdruckerzeugenden Aggregat in Verbindung steht, wobei die Unterdruck-Ableitung **(28)** tagential durch den Behältermantel **(29)** in einen im Kopf des Behälters **(10)** angeordneten Abscheider **(10)** einbindet, wobei durch eine Öffnung **(34)** in der Strahlkammer **(25)** eine an die Unterdruck-Zuleitung **(20)** angeschlossene, eine Düse **(24)** tragende Strahllanze **(22)** geführt ist, wobei die Unterdruck-Zuleitung **(20)** mit einer Dosiereinrichtung **(18)** und/oder einem Injektor **(19)** für die Dosierung des Strahlmittels in den Kreislauf versehen und mit einem, eine Beschleunigungsstrecke **(L)** bildenden geradlinig verlaufenden Beschleunigungsrohr **(21)** verbunden ist, das der Strahllanze vorgeordnet ist und das gegenüber der Zuleitung eine weitere Durchmesserverrringerung aufweist, ist, **gekennzeichnet durch** folgende Merkmale,
a) in die Unterdruck-Zuleitung ist stromabwärts gelegen eine ein- und auskoppelbare Benetzungseinrichtung **(46)** für die Benetzung des Strahlmittels mit Reinigungsflüssigkeit eingebunden und
b) der Austrittsstutzen **(45)** des Aggregates **(4)** für die Abluft ist über eine Kühl- oder Heizeinrichtung **(47)** mit der Unterdruck-Zuleitung **(20)** zu- und abschaltbar verbunden.

18. Vorrichtung nach Anspruch 17, **dadurch gekennzeichnet, dass** das Beschleunigungsrohr **(21)** sich über eine Länge **(L)** des 5 bis 50fachen Innendurchmessers **(d1)** der Unterdruck-Zuleitung **(20)** erstreckt und einen Innendurchmesser **(d2)** aufweist, der das 0,1 bis 0,9fache des Innendurchmessers **(d1)** der Unterdruck-Zuleitung **(20)** beträgt.

19. Vorrichtung nach Anspruch 17 und 18, **dadurch gekennzeichnet, dass** das Beschleunigungsrohr **(21)** direkt an die Dosiereinrichtung **(18)** und/oder den Injektor **(19)** angeschlossen ist.

20. Vorrichtung nach Anspruch 17 bis 19, **dadurch gekennzeichnet, dass** das Beschleunigungsrohr **(21)** als ein ausziehbares Teleskoprohr ausgebildet ist.

21. Vorrichtung nach einem oder mehreren der vorherigen Ansprüche 18 bis **20, dadurch gekennzeichnet, dass** die Strahllanze **(22)** am Beschleunigungsrohr **(21)** lösbar und auswechselbar befestigt ist.

22. Vorrichtung nach einem oder mehreren der vorherigen Ansprüche 17 bis 20, **dadurch gekennzeichnet, dass** die in die Strahlkammer **(25)** hineinreichende Strahllanze **(22)** in der Öffnung **(34)** der Strahlkammerwand **(26)** in einem Kegel von annähernd 90° verschwenkbar und auf unterschiedliche Strahlabstände **(a)** einstellbar angeordnet ist.

23. Vorrichtung nach Anspruch 17, **dadurch gekennzeichnet, dass** die Unterdruck-Zuleitung **(20)** und Unterdruck-Ableitung **(28)** durch eine absperrbare Kurzschlußleitung **(30)** unter Umgehung der Strahlkammer **(25)** miteinander verbunden sind.

24. Vorrichtung nach Anspruch 17, **dadurch gekennzeichnet, dass** das Innere der Strahlkammer **(25)** durch eine Beleuchtung **(53)** von außen einsehbar ausgebildet ist und ein Belüftungsventil **(37)** aufweist.

25. Vorrichtung nach Anspruch 17, **dadurch gekennzeichnet, dass** der Behälter **(11)** mit einer zur Atmosphäre hin geöffneten Fremdbelüftung **(16)** versehen ist.

26. Vorrichtung nach Anspruch 17, **dadurch gekennzeichnet, dass** der weitere Behälter **(10)** durch ein in der Auslaßöffnung **(14)** des Schütt-Trichters **(12)** angeordnetes Schließorgan **(15)** vom Behälter **(11)** absperr- und öffnungsbar ist.

27. Vorrichtung nach Anspruch 17, **dadurch gekennzeichnet, dass** die Strahlkammer **(25)** mit einem Sammeltrichter **(27)** versehen ist, an dem ein Absaugstutzen zum Anschluß der Unterdruck-Ableitung **(28)** angeordnet ist.

28. Vorrichtung nach Anspruch 17 und 27, **dadurch gekennzeichnet, dass** die Strahlkammer **(25)** aus einer einseitig offenen Strahlglocke besteht, deren offenen Seite auf die Behandlungsfläche dichtend und bei anliegendem Unterdruck verfahrbar aufgesetzt angeordnet ist.

29. Vorrichtung nach Anspruch 17, 27 und 28, **dadurch gekennzeichnet, dass** der offenen Seite der Strahlglocke eine Ansaugplatte **(49)** zur Abdichtung gegen eine mit Öffnungen **(52)** versehene Fläche **(51),** beispielsweise Drahtgeflecht, zugeordnet ist, wobei die Ansaugplatte die Öffnungen der zu behandelnden Fläche abdeckt.

30. Vorrichtung nach Anspruch 29, **dadurch gekennzeichnet, dass** die Ansaugplatte **(49)** flexibel ausgebildet ist und eine Abdichtschicht **(50)** aus geschlossenzelligem Schaumgummi aufweist.

31. Vorrichtung nach Anspruch 28 bis 30, **dadurch gekennzeichnet, dass** die auf die Behandlungsstelle aufgesetzten Glockenwände **(26)** mit Dichtelementen **(39)** versehen sind.

32. Vorrichtung nach Anspruch 31, **dadurch gekennzeichnet, dass** die Dichtelemente **(39)** aus geschlossenzelligem Schaumgummi, Folien, Bürsten, Gummilippen, gefüllten Dichtelementen, Schläuchen aus Latex, Gummi oder Profildichtungen bestehen.

33. Vorrichtung nach einem oder mehreren der vorherigen Ansprüche 17 bis 32, **dadurch gekennzeichnet, dass** die Strahlglocke **(25)** Wände besitzt, deren Stirnflächen zueinander eben ausgebildet sind.

34. Vorrichtung nach einem oder mehreren der vorherigen Ansprüche 17 bis 33, **dadurch gekennzeichnet, dass** die auf gekrümmt oder eckig ausgebildeten Behandlungsflächen aufsetzbare Strahlglocke **(25)** Wände **(26)** besitzt, die zueinander konvex, konkav oder v-förmig ausgebildet sind oder Gelenke aufweist, die an unterschiedliche Oberflächenbeschaffenheit anpassbar sind.

35. Vorrichtung nach Anspruch 17, **dadurch gekennzeichnet, dass** die Strahlkammer **(25)** geschlossen ausgebildet und aus einer stationär aufgestellten Haube **(41)** und einem an die Haube **(41)** angesetzten, einen Absaugstutzen aufweisenden Sammeltrichter **(42)** zusammengesetzt ist, und dass in der Anschlußebene **(B-B)** zwischen Haube **(41)** und Trichter **(42)** ein Strahltisch **(43)** angeordnet ist.

36. Vorrichtung nach Anspruch 17 und 35, **dadurch gekennzeichnet, dass** der Strahltisch **(43)** ein Drehteller ist, dessen Antriebsachse **(C-C)** in der Trichterachse **(D-D)** angeordnet und mit einem am Sammeltrichter **(42)** befestigten Antrieb verbunden ist.

37. Vorrichtung nach Anspruch 17 und 35, **dadurch gekennzeichnet, dass** der Strahltisch **(43)** ein Schwenkteller ist, der um eine in der Anschlußebene **(B-B)** liegende Achse schwenkbar ist.

38. Vorrichtung nach einem oder mehreren der vorherigen Ansprüche 17 bis 37, **dadurch gekennzeichnet, dass** die Strahlkammer **(25)** mit einem Sichtfenster **(36)** aus Glas oder Acrylglas versehen ist, das über oder unter der Strahllanze **(22)** in der Vorderwand **(33)** angeordnet ist.

39. Vorrichtung nach einem oder mehreren der vorherigen Ansprüche 17 bis 37, **dadurch gekennzeichnet, dass** die Strahlkammer **(25)** mit mindestens einer Beschickungsöffnung **(44)** versehen ist.

40. Vorrichtung nach Anspruch 17, **dadurch gekennzeichnet, dass** die Strahlkammer **(25)** aus schlagzähem Kunststoff, vorzugsweise Polyamid oder Polypropylen, besteht.

41. Vorrichtung nach einem oder mehreren der vorherigen Ansprüche 17 bis 40, **dadurch gekennzeichnet, dass** die Strahllanze **(22)** und das Beschleunigungsrohr **(21)** einstückig ausgebildet sind.

42. Vorrichtung nach einem oder mehreren der vorherigen Ansprüche 17 bis 41, **dadurch gekennzeichnet, dass** die Strahllanze **(22)** mit einer auswechselbaren Düse **(24)** versehen ist.

43. Vorrichtung nach einem oder mehreren der vorherigen Ansprüche 17 bis 42, **dadurch gekennzeichnet, dass** die Strahllanze **(22)** mit einem verstellbaren Anschlag **(38)** versehen ist.

44. Vorrichtung nach einem oder mehreren der vorherigen Ansprüche 17 bis 43, **dadurch gekennzeichnet, dass** die Strahllanze **(22)** mit einem abgedichteten Kugelgelenk in der Öffnung **(34)** der Vorderwand **(33)** der Strahlkammer **(25)** angeordnet ist.

45. Vorrichtung nach einem oder mehreren der vorherigen Ansprüche 17 bis 44, **dadurch gekennzeichnet, dass** die Strahllanze **(22)** in der Öffnung **(34)** der Vorderwand **(33)** der Strahlkammer durch eine Dichtung **(35)** hindurchführbar gehalten ist.

46. Vorrichtung nach Anspruch 45, **dadurch gekennzeichnet, dass** die Dichtung **(35)** ein Simmering ist.

47. Vorrichtung nach Anspruch 46, **dadurch gekennzeichnet, dass** die Dichtung **(35)** an die Vorderwand **(33)** angeflanscht ist.

48. Vorrichtung nach Anspruch 17, **dadurch gekennzeichnet, dass** das unterdruckerzeugende Aggregat **(4)** ein Naß- und/oder Trockensauger, eine Pumpe, ein Verdichter oder Gebläse ist.

49. Vorrichtung nach Anspruch 17, **dadurch gekennzeichnet, dass** das unterdruckerzeugende Aggregat **(4)** über eine Saugleitung **(7)** mit dem Behälter **(10)** in Verbindung steht.

50. Vorrichtung nach Anspruch 17, **dadurch gekennzeichnet, dass** das unterdruckerzeugende Aggregat **(4)** auf dem Behälter **(10)** angeordnet und direkt mit diesem in Verbindung steht.

51. Vorrichtung nach Anspruch 17, **dadurch gekennzeichnet, dass** das unterdruckerzeugende Aggregat **(4)** in die Unterdruck-Ableitung **(28)** eingebunden ist.

52. Vorrichtung nach Anspruch 17, **dadurch gekennzeichnet, dass** das Schließorgan **(15)** ein Schieber, ein Ventil, eine Klappe, Blende, Schnecke oder Zellradschleuse ist.

53. Vorrichtung nach einem oder mehreren der vorherigen Ansprüche 17 bis 52, **dadurch gekennzeichnet, dass** die Schütt-Trichter **(12;13)** in den Behältern **(10;11)** einen Öffnungswinkel **(α)** von 60 bis 120° aufweisen.

54. Vorrichtung nach einem oder mehreren der vorherigen Ansprüche 17 bis 53, **dadurch gekennzeichnet, dass** die Behälter **(10;11)** ein gemeinsames Gehäuse besitzen.

## Claims

1. Process for treating, especially cleaning, abrasive stripping or removal of coatings, graffiti or other superficial soiling on parts, respectively work pieces or surfaces of stones, concrete, wood, metal, plastic, glass, ceramic or paper, whereby a blasting means is introduced by gravity from a storage container into a carrier air stream guided inside a hose line system formed of supply and return lines, is transported through these by means of vacuum and is hurled against the surface to be treated in a blasting chamber through a blasting lance, from there it is transported back into the carrier air stream in such a way that the blasting way travels in a circuit, whereby the acceleration of the blasting means is generated essentially by the vacuum applied in the blasting chamber and through the increase in the blasting velocity in an acceleration section by means of diameter reduction from the supply line to the acceleration section, **characterized in that** the vacuum in the circuit is adjusted to 50 to 300 mbar, the blasting means is dosed into the carrier air volume stream in a quantity, referenced to the carrier air volume stream, of 0.01 to 25.0% with or without cleaning fluid, the entry of energy on the parts to be treated is controlled by velocity adjusting of blasting means of approximately 20 to 80 m/s through diameter reduction in dependence of the coating to be removed, then, while being observed, the blasting means-air mixture is directed with a rhythmically repeated back and forth motion over the surface to be treated, or the surface to be treated is set into rotation and/or swung in the blasting air-mixture, the blasting means is if necessary dried after his separation and collection and the remaining contamination-air mixture is subjected to a fine-cleaning in a wet and/or dry vacuum cleaner, and the fresh air and/or optionally the separated air, having been cooled or heated, is then again fed into the vacuum circuit.

2. Process according to claim 1, **characterized in that** the acceleration takes place in a rectilinear running acceleration section inside the vacuum supply line.

3. Process according to claim 1 and 2, **characterized in that** the acceleration of blasting means is adjusted through a diameter reduction of the acceleration pipe to 0.1 to 0.9 times the diameter **(d1)** of the vacuum supply line **(20)** over a length of 5 to 50 times the inner diameter **(d2)** of the vacuum supply line **(20)**.

4. Process according to claim 3, **characterized in that** the blasting velocity of the blasting means at constant volume flow of air and blasting means is controlled by changing the diameter ratio **(d2:d1)** and/or then length **(L)** of the acceleration section and/or the blasting distance **(a)** of the blasting lance **(22)** with the nozzle **(24)** from the surface to be treated, and the rotary speed of the surface to be treated.

5. Process according to claim 3, **characterized in that** the blasting distance **(a)** is approximately 0.1 to 1.0 times the inner diameter **(d2)** of the acceleration pipe.

6. Process according to claim 1 to 5, **characterized in that** the acceleration is performed prior to entering the blasting chamber in an acceleration pipe forming an acceleration section **(L)**.

7. Process according to claim 1 to 6, **characterized in that** the acceleration section **(L)** extends into the blasting chamber.

8. Process according to claim 1 to 7, **characterized in that** the back and forth motion of the blasting means-air mixture is performed by means of a pendulum and/or swinging motion of the blasting lance.

9. Process according to claim 1 to 8, **characterized in that** the blasting chamber is positioned sealingly on the surface to be treated, evacuated by the vacuum and, after treatment, is displaced from the treated surface to an untreated surface.

10. Process according to claim 9, **characterized in that** the displacement motion is performed while vacuum is applied.

11. Process according to claim 9, **characterized in that** the displacement motion is performed while the circuit **(K)** is short-circuited under atmospheric pressure.

12. Process according to claim 1, **characterized in that** for generating of vacuum in the open circuit **(K)** wet and/or dry vacuum cleaners, pumps, compressors or blowers are used.

13. Process according to claim 1 to 12, **characterized in that** a carrier air volume flow of approximately 150 to 400 m³/h, preferably 230 m³/h, is set.

14. Process according to claim 1 to 13, **characterized in that** the aggregates generating the vacuum are applied in one or several stages.

15. Process according to one claim or more of the preceding claims, **characterized in that** the dosing of the blasting means into the carrier air volume stream is adjusted preferably to 0.013% of the carrier air volume stream.

16. Process according to one or more of the preceding claims, **characterized in that** as blasting means sodium hydrogen carbonate, plastic particles, preferably thermosetting plastic particles, ashes, crushed fine-grained slag, corundum, quartz, metallic particles, glass beads, plant/organic particles or their mixtures are used.

17. Device for carrying out the process according to claim 1, with a container designed as a discharging hopper **(13)**, conical at its lower end, with an outlet opening **(14)** for the storage of a fine and/or coarse grained blasting means, that, due to the gravity, passes into the outlet opening of the discharging hopper, which is connected to a flexible supply line **(20)** for the transporting of the blasting means into a blasting chamber **(25)** that is evacuable with a vacuum generating unit **(4)** and that admits parts and surfaces to be treated, which chamber **(25)** is connected to a vacuum return line **(28)**, whereby through the opening **(34)** in the blasting chamber **(25)** a blasting lance **(22)** carrying a nozzle **(24)** and connected with the vacuum supply line **(20)** is guided, whereby the vacuum supply line **(20)** is provided with a dosing fixture **(18)** and/or an injector **(19)** for the dosing of the blasting means into the circuit, **characterized** through the following features:
a) connected into the vacuum supply line **(20)**, placed downstream, is a connectable and disconnectable wetting fixture **(46)** for wetting the blasting means with cleaning fluid,
b) the exit pipe **(45)** of the unit **(4)** for the exhaust air is connected with the vacuum supply line **(20)** via a cooling or heating apparatus **(47)** which can be switched on and off.

18. Device according to claim 17, **characterized in that** the acceleration pipe **(21)** extends over a length **(L)** of 5 to 50 times the inner diameter **(d1)** of the vacuum supply line **(20)** and the acceleration pipe **(21)** has an inner diameter **(d2)** which is 0.1 to 0.9 times the inner diameter **(d1)** of the vacuum supply line **(20)**.

19. Device according to claim 17 and 18, **characterized in that** the acceleration pipe **(21)** is attached directly at the dosing fixture **(18)** and/or injector **(19).**

20. Device according to claim 17 to 19, **characterized in that** the acceleration pipe **(21)** is designed as an telescopic pipe.

21. Device according to one or more of the preceding claims 17 to 20, **characterized in that** the blasting lance **(22)** is releasably and replaceably fastened to the acceleration pipe **(21).**

22. Device according to one or more of the preceding claims 17 to 20, **characterized in that** the blasting lance **(22)** extending into the blasting chamber **(25)** is adjustably arranged in the opening **(34)** of the blasting chamber wall **(26),** and can be swing within a cone of approximately 90° and at different blasting distances **(a)**.

23. Device according to claim 17, **characterized in that** the vacuum supply line **(20)** and the vacuum return line **(28)** are connected to each other via a closable short-circuit line **(30)** bypassing the blasting chamber **(25).**

24. Device according to claim 17, **characterized in that** the inside of the blasting chamber **(25)** is designed so that it can be viewed from outside with the aid of an illumination device **(53)** and that the blasting chamber has a vent valve **(37)**.

25. Device according to claim 17, **characterized in that** the container **(11)** is provided with an outside vent **(16)** open to the atmosphere.

26. Device according to claim 17, **characterized in that** the other container **(10)** can be closed and opened to the container **(11)** through a closing mechanism **(15)** arranged in the outlet opening **(14)** of the discharging hopper **(12)**.

27. Device according to claim 17, **characterized in that** the blasting chamber **(25)** is provided with a collecting hopper **(27)**, on which an exhaust suction pipe is arranged for connecting the vacuum return line **(28)**.

28. Device according to claim 17 and 28, **characterized in that** the blasting chamber **(25)** consists of a blasting bell open on one side, whose open side is positioned sealingly and movably on the surface to be treated under applied vacuum.

29. Device according to claim 17, 27 and 28, **characterized in that** the open side of the blasting bell is associated with a suction plate **(49)** for sealing against a surface **(51)** provided with openings **(52)**, for example a wire mesh, whereby the suction plate covers the openings of the surface to be treated.

30. Device according to claim 30, **characterized in that** the suction plate **(49)** is designed to be flexible and has a sealing layer **(50)** of closed-cell foam rubber.

31. Device according to claim 28 to claim 30, **characterized in that** the bell walls **(26)** that are placed on the spot to be treated are provided with sealing elements **(39)**.

32. Device according to claim 32, **characterized in that** the sealing element **(39)** consist of closed-cell foam rubber, films, brushes, rubber lips, filled sealings, latex hoses, rubber or profile seals.

33. Device according to one or more of preceding claims 17 to 32, **characterized in that** the blasting bell **(25)** has walls, whose frontal surfaces are flat with respect to each other.

34. Device according to one or more of preceding claims 17 to 33, **characterized in that** the blasting bell **(25)** which can be placed on surfaces to be treated that are formed as curved or angular, has walls **(26)** that are designed convex, concave or v-shaped with respect to each other or exhibit joints that can be adapted to different surface configurations.

35. Device according to claim 17, **characterized in that** the blasting chamber **(25)** is closed and comprises an stationary hood **(41)** and a collecting hopper **(42)** that is placed on the hood **(41)** and exhibits an exhaust suction tube, and that a blasting table **(43)** is arranged in the attachment plane **(B-B)** between the hood **(41)** and the hopper **(42)**.

36. Device according to claim 17 and 35, **characterized in that** the blasting chamber **(25)** is closed and comprises an stationary hood **(41)** and a collecting hopper **(42)** that is placed on the hood **(41)** and exhibits an exhaust suction tube, and that a blasting table **(43)** is arranged in the attachment plane **(B-B)** between the hood **(41)** and the hopper **(42)**.

37. Device according to claim 17 and 35, **characterized in that** the blasting table **(43)** is a swinging plate, which can swing about an axis in the attachment plane **(B-B).**

38. Device according to one or more of preceding claims 17 to 37, **characterized in that** the blasting chamber **(25)** is provided with a viewing window **(36)** of glass or acrylic glass, which is arranged above or below the blasting lance **(22)** in the front wall **(33)**.

39. Device according to one or more of preceding claims 17 to 37, **characterized in that** the blasting chamber **(25)** is provided with at least one loading opening **(44)**.

40. Device according to claim 17, **characterized in that** the blasting chamber **(25)** consists of impact-resistant plastic, preferably polyamide or polypropylene.

41. Device according to one or more of the preceding claims 17 to 40, **characterized in that** the blasting lance **(22)** and the acceleration pipe **(21)** are made in one piece.

42. Device according to one or more of the preceding claims 17 to 41, **characterized in that** the blasting lance **(22)** is provided with an exchangeable nozzle **(24)**.

43. Device according to one or more of the preceding claims 17 to 42, **characterized in that** the blasting lance **(22)** is provided with an adjustable stop **(38)**.

44. Device according to one or more of the preceding claims 17 to 43, **characterized in that** the blasting lance **(22)** is arranged with a sealed ball joint in the opening **(34)** of the front wall **(33)** of the blasting chamber **(25).**

45. Device according to one or more of the preceding claims 17 to 44, **characterized in that** the blasting lance **(22)** is held in the opening **(34)** of the front wall **(33)** of the blasting chamber **(25)** so it can be led through a seal **(35)**.

46. Device according to claim 45, **characterized in that** the seal **(35)** is a shaft sealing ring.

47. Device according to claim 46, **characterized in that** the seal is flanged to the front wall **(33)**.

48. Device according to claim 17, **characterized in that** the vacuum-generating unit **(4)** is a wet and/or dry vacuum cleaner, a pump, a compressor or a blower.

49. Device according to claim 17, **characterized in that** the vacuum-generating unit **(4)** is connected via a suction line **(7)** with the container **(10)**.

50. Device according to claim 17, **characterized in that** the vacuum-generating unit **(4)** is arranged on the container **(10)** and is directly connected to the same.

51. Device according to claim 17, **characterized in that** the vacuum-generating unit **(4)** is integrated in the vacuum return line **(28).**

52. Device according to claim 17, **characterized in that** the closing mechanism **(15)** is a slider, a valve, a flap, a shutter, a worm feed or cellular wheel sluice.

53. Device according to one or more of the preceding claims 17 to 52, **characterized in that** the discharging hoppers **(12;13)** exhibit in the containers **(10;11)** an opening angle **(α)** of 60° to 120°.

54. Device according to one or more of the preceding claims 17 to 54, **characterized in that** the containers **(10;11)** have a common housing.

## Revendications

1. Procédé pour le traitement, notamment le nettoyage, la séparation éliminative d'enduits, de tags graffiti ou d'autres impuretés superficielles se trouvant sur toutes sortes de pièces ou sur des parties surfacielles en pierre, béton, bois, métal, matière synthétique, verre, céramique ou papier, pour lequel un agent de traitement superficiel, un fluide de «projection», est amené par gravité d'un réservoir vers un flux d'air porteur traversant un système de tuyauteries formé de conduites d'amenée et de sortie, d'où il est refoulé par dépression pour être projeté moyennant une lance de «sablage» à l'intérieur d'une chambre à projections contre la surface à traiter et retransporté de là au flux d'air porteur de sorte à être véhiculé en circuit, l'accélération de l'agent de projection étant produite essentiellement par la dépression à la quelle est alimentée la chambre à projections et par l'augmentation de la vitesse de projection au moyen de la réduction diamétrale de l'amenée à la lance de projection, **caractérisé en ce que** la dépression au circuit est ajustée à 50 jusqu'à 300 mbar, l'agent de projection est dosé avec ou sans liquide de nettoyage au flux d'air porteur dans une quantité de 0,01 à 25,0 % rapportée au flux d'air porteur, l'apport d'énergie aux pièces à traiter est commandé moyennant l'ajustage de la vitesse de projection de l'agent de projection de 20 à 80 m/s par réduction diamétrale en fonction des enduits à éliminer, ensuite le mélange d'agent de projection et d'air est dirigé sous contrôle visuel sur la surface à traiter par un mouvement de va-et-vient à répétition rythmique ou bien la pièce dont la surface est à traiter sera mise en rotation ou encore basculée dans le mélange d'agent de projection et d'air, l'agent de projection est séché le cas échéant après sa séparation et sa collecte et le mélange de substances contaminées et d'air est soumis à une purification fine à l'aspirateur humide et/ou sec, et que de l'air frais et/ou l'air séparé au choix sera alors ramené au circuit de dépression à l'état refroidi ou chauffé.

2. Procédé suivant la revendication 1, **caractérisé en ce que** l'accélération est effectuée sur un parcours d'accélération à allure rectiligne dans la zone de la conduite d'amenée à dépression.

3. Procédé suivant les revendications 1 et 2, **caractérisé en ce que** l'accélération des agents de projection est ajustée, par une réduction diamétrale du tuyau accélérateur, à 0,1 jusqu'à 0,9 fois le diamètre **(d1)** de la conduite d'amenée à dépression **(20)** sur une longueur de 5 à 50 fois le diamètre intérieur **(d2)** de la conduite d'amenée à dépression **(20)** dont le diamètre est réduit.

4. Procédé suivant la revendication 3, **caractérisé en ce que** la vitesse de jet des agents de projection est commandée à flux volumique constant d'air et d'agent de projection par la variation des rapports diamétraux **(d2** : **d1)** et/ou de la longueur **(L)** du parcours d'accélération et/ou de la distance de projection **(a)** de la lance de projection **(22)** avec la tuyère **(24)** de la surface à traiter et de la vitesse de rotation de la surface à traiter.

5. Procédé suivant la revendication 4, **caractérisé en ce que** la distance de projection **(a)** s'élève environ à 0,1 jusqu'à 1,0 fois le diamètre intérieur **(d2)** du tuyau d'accélération.

6. Procédé suivant les revendications 1 à 5, **caractérisé en ce que** l'accélération est effectuée avant l'entrée dans la chambre à projections dans un tuyau d'accélération formant un parcours d'accélération **(L)**.

7. Procédé suivant les revendications 1 à 6, **caractérisé en ce que** le parcours d'accélération **(L)** se prolonge jusque dans la chambre à projections.

8. Procédé suivant les revendications 1 à 7, **caractérisé en ce que** le mouvement de va-et-vient du mélange d'agent de projection et d'air est effectué moyennant des mouvements pendulaires et/ou basculants de la lance de projection.

9. Procédé suivant la revendication 1, **caractérisé en ce que** la chambre à projections est placée de manière étanche sur la surface à traiter, évacuée par l'effet de dépression et déplacée de la surface traitée vers une surface non traitée.

10. Procédé suivant la revendication 9, **caractérisé en ce que** le mouvement de déplacement est effectué à la dépression alimentée.

11. Procédé suivant la revendication 9, **caractérisé en ce que** le mouvement de déplacement est effectué à circuit « court-circuité » **(K)** sous pression atmosphérique.

12. Procédé suivant la revendication 1, **caractérisé en ce que** sont employés des aspirateurs humides et/ou secs, des pompes, des compresseurs ou des soufflantes pour la génération de la dépression au circuit ouvert **(K)**.

13. Procédé suivant les revendications 1 à 12, **caractérisé en ce qu'**il est ajusté un flux volumique d'air porteur de 150 à 400 m³/h, de préférence 230 m³/h.

14. Procédé suivant les revendications 1 à 13, **caractérisé en ce que** les sous-groupes générateurs de dépression sont conçus comme organes monoétagés ou à plusieurs étages.

15. Procédé suivant l'une ou plusieurs des revendications précédentes, **caractérisé en ce que** le dosage de l'agent de projection au flux volumique d'air porteur, est ajusté de préférence à 0,013 % du flux volumique d'air porteur.

16. Procédé suivant l'une ou plusieurs des revendications précédentes, **caractérisé en ce que** les agents de projection utilisés sont le bicarbonate de sodium, des particules de matières synthétiques, de préférence des particules de résines thermodurcissables, des cendres, des scories finement désintégrées, du corindon, du quartz, des particules métalliques, des perles de verre, des particules végétales/organiques ou encore des mélanges de ces substances.

17. Dispositif pour la réalisation du procédé suivant la revendication 1, comprenant un récipient **(11)** dont la partie inférieure est conçue comme trémie déverseuse conique **(13)** avec ouverture de décharge **(14)**, servant de réservoir pour l'agent de projection à granulation fine et/ou grossière arrivant par sa gravité à l'ouverture de décharge de la trémie déverseuse qui est raccordée à une amenée flexible **(20)** pour la manutention de l'agent de projection vers une chambre à projections **(25)** pourvue d'un sous-groupe **(4)** générant une dépression, laquelle peut être évacuée et recevoir des pièces et des surfaces à traiter, étant elle-même reliée à une dérivation à dépression **(28)** qui est solidaire d'au moins un autre récipient **(10)** disposé sur la trémie déverseuse **(13)** du réservoir **(11),** ce récipient **(10)** présentant lui aussi une trémie déverseuse **(12)** en forme conique et relié au sous-groupe générant la dépression, la dérivation à dépression **(28)** étant intégrée tangentiellement à travers l'enveloppe du récipient **(29)** dans un séparateur **(10)** disposé dans la tête du récipient **(10)** et une lance de projection **(22)** pourvue d'une tuyère **(24)** est reliée à l'amenée à dépression **(20)** par une ouverture **(34)** ménagée dans la chambre à projections **(25)**, cette amenée à dépression **(20)** étant pourvue d'un dispositif de dosage **(18)** et/ou d'un injecteur **(19)** pour le dosage de l'agent de projection au circuit et reliée à un tuyau d'accélération **(21)** à allure rectiligne avec lequel elle forme un parcours d'accélération **(L),** ce tuyau étant disposé en amont de la lance de projection et présentant une autre réduction diamétrale par rapport à l'amenée, **caractérisé par** les critères suivants :
a) l'amenée à dépression est pourvue, disposé en aval, d'un organe de mouillage (46) embrayable et débrayable pour l'humectation de l'agent de projection avec du liquide de nettoyage et
b) par l'intermédiaire d'une installation de refroidissement et de chauffage **(47)**, la tubulure de sortie **(45)** du sous-groupe **(4)** pour l'air d'évacuation est reliée à l'amenée à dépression **(20)** de manière à pouvoir être mise en et hors service.

18. Dispositif suivant la revendication 17, **caractérisé en ce que** le tuyau d'accélération **(21)** s'étend sur une longueur **(L)** de 5 à 50 fois le diamètre intérieur **(d1)** de la conduite d'amenée à dépression **(20)** et présente un diamètre intérieur **(d2)** qui s'élève à 0,1 jusqu'à 0,9 fois le diamètre intérieur **(d1)** de la conduite d'amenée à dépression **(20).**

19. Dispositif suivant les revendications 17 et 18, **caractérisé en ce que** le tuyau d'accélération **(21)** est relié directement au dispositif de dosage **(18)** et/ou l'injecteur **(19)**.

20. Dispositif suivant les revendications 17 à 19, **caractérisé en ce que** le tuyau d'accélération **(21)** est conçu et dimensionné comme un tube télescopique.

21. Dispositif suivant l'une ou plusieurs des revendications précédentes 18 à 20, **caractérisé en ce que** la lance de projection **(22)** est fixée tuyau d'accélération **(21)** de manière amovible et remplaçable.

22. Dispositif suivant l'une ou plusieurs des revendications précédentes 17 à 20, **caractérisé en ce que** la lance de projection **(22)**, intégrée en partie dans la chambre à projections **(25)**, est disposée dans l'ouverture **(34)** de la paroi de la chambre à projections **(26)** de manière basculante à un cône de presque 90° et réglable à différentes distances de projection **(a)**.

23. Dispositif suivant la revendication 17, **caractérisé en ce que** la conduite d'amenée à dépression (20) et la conduite de dérivation à dépression **(28),** sont reliées mutuellement par une conduite de « court-circuit » **(30)** en « by-passant » la chambre à projections **(25).**

24. Dispositif suivant la revendication 17, **caractérisé en ce que** l'intérieur de la chambre à projections **(25)** est conçu de manière à pouvoir être inspecté de l'extérieur par la présence d'un éclairage **(53)** et qu'il présente une soupape de ventilation **(37).**

25. Dispositif suivant la revendication 17, **caractérisé en ce** que le récipient **(11)** est muni d'une ventilation forcée **(16)** qui est ouverte vers l'atmosphère.

26. Dispositif suivant la revendication 17, **caractérisé en ce que** l'autre récipient **(10)** peut être bloqué et ouvert par rapport au récipient **(11)** par un organe de fermeture **(15)** disposé dans l'ouverture de sortie **(14)** de la trémie déverseuse **(12).**

27. Dispositif suivant la revendication 17, **caractérisé en ce que** la chambre à projections **(25)** est munie d'une trémie collectrice **(27)** sur laquelle est disposée une tubulure d'aspiration pour le raccordement de la conduite de dérivation à dépression **(28).**

28. Dispositif suivant les revendications 17 et 27, **caractérisé en ce que** la chambre à projections **(25)** est formée d'une cloche à projections à ouverture unilatérale, ce côté ouvert étant disposé de manière étanche sur la surface à traiter et pouvant être déplacé à dépression alimentée.

29. Dispositif suivant les revendications 17, 27 et 28, **caractérisé en ce qu'**une plaque d'aspiration **(49)** est attribuée au côté ouvert de la cloche à projections pour l'étanchéification contre une surface **(51)** pourvue d'ouvertures **(52)**, par exemple du treillis en fil, cette plaque d'aspiration recouvrant les ouvertures de la surface à traiter.

30. Dispositif suivant la revendication 29, **caractérisé en ce que** la plaque d'aspiration **(49)** est dimensionnée de manière flexible et qu'elle présente une couche d'étanchéité **(50)** en caoutchouc mousse à alvéoles fermées.

31. Dispositif suivant les revendications 28 à 30, **caractérisé en ce que** les parois de la cloche **(26)** placées sur l'endroit à traiter, sont pourvues d'éléments d'étanchement **(39).**

32. Dispositif suivant la revendication 31, **caractérisé en ce que** les éléments d'étanchement **(39)** sont en caoutchouc mousse à alvéoles fermées, des feuilles, des brosses, des lèvres de caoutchouc, des éléments d'étanchement bourrés, des tuyaux flexibles de latex, de caoutchouc ou des joints profilés.

33. Dispositif suivant l'une ou plusieurs des revendications précédentes 17 à 32, **caractérisé en ce que** la cloche à projections **(25)** présente des parois dont les faces frontales sont conçues planes les unes par rapport aux autres.

34. Dispositif suivant l'une ou plusieurs des revendications précédentes 17 à 33, **caractérisé en ce que** la cloche à projections **(25)** pouvant être placée sur des surfaces à traiter courbées ou angulaires, présente des parois **(26)** conçues en forme convexe, concave ou de « V » les unes par rapport aux autres, ou qui présente des articulations pouvant être adaptées à différentes natures de la surface.

35. Dispositif suivant la revendication 17, **caractérisé en ce que** la chambre à projections **(25)** est conçue en forme fermée et composée d'un capot **(41)** monté stationnairement et d'une trémie collectrice **(42)** appliquée au capot **(41)** et présentant une tubulure d'aspiration, et qu'une table à projections **(43)** est disposée au plan de raccord **(B-B)** entre le capot **(41)** et la trémie **(42)**.

36. Dispositif suivant les revendications 17 et 35, **caractérisé en ce que** la table à projections **(23)** est un plateau tournant dont l'axe de commande **(C-C)** est disposé à l'axe de la trémie **(D-D)** et relié à une commande fixée à la trémie collectrice **(42)**.

37. Dispositif suivant les revendications 17 et 35, **caractérisé en ce que** la table à projections **(23)** est un plateau pivotant orientable autour d'un axe situé au plan de raccord **(B-B).**

38. Dispositif suivant l'une ou plusieurs des revendications précédentes 17 à 37, **caractérisé en ce que** la chambre à projections **(25)** est pourvue d'un voyant **(36)** de verre ou en verre acrylique disposé dans la paroi avant **(33)** au-dessus ou au-dessous de la lance de projection **(22)**.

39. Dispositif suivant l'une ou plusieurs des revendications précédentes 17 à 37, **caractérisé en ce que** la chambre à projections **(25)** est pourvue d'au moins une ouverture de chargement **(44)**.

40. Dispositif suivant la revendication 17, **caractérisé en ce que** la chambre à projections **(25)** est en matière synthétique à résistance élevée aux chocs, de préférence en polyamide ou en polypropylène.

41. Dispositif suivant l'une ou plusieurs des revendications précédentes 17 à 40, **caractérisé en ce que** la lance de projection **(22)** et le tuyau d'accélération **(21)** sont conçus en une seule pièce.

42. Dispositif suivant l'une ou plusieurs des revendications précédentes 17 à 41, **caractérisé en ce que** la lance de projection **(22)** est pourvue d'une tuyère échangeable **(24).**

43. Dispositif suivant l'une ou plusieurs des revendications précédentes 17 à 42, **caractérisé en ce que** la lance de projection **(22)** est pourvue d'une butée ajustable **(38).**

44. Dispositif suivant l'une ou plusieurs des revendications précédentes 17 à 43, **caractérisé en ce que** la lance de projection **(22)** est disposée avec une articulation sphérique étanchéifiée dans l'ouverture **(34)** de la paroi avant **(33)** de la chambre à projections **(25)**.

45. Dispositif suivant l'une ou plusieurs des revendications précédentes 17 à 44, **caractérisé en ce que** la lance de projection **(22)** est maintenue par un joint **(35)** dans l'ouverture **(34)** de la paroi avant **(33)** de la chambre à projections de manière à pouvoir être introduite.

46. Dispositif suivant la revendication 45, **caractérisé en ce que** le joint **(35)** est une bague à lèvres avec ressort.

47. Dispositif suivant la revendication 46, **caractérisé en ce que** le joint **(35)** est bridé sur la paroi avant **(33)**.

48. Dispositif suivant la revendication 17, **caractérisé en ce que** le sous-groupe générant la dépression **(4)** est un aspirateur humide et/ou sec, une pompe, un compresseur ou une soufflante.

49. Dispositif suivant la revendication 17, **caractérisé en ce que** le sous-groupe générant la dépression **(4)** est solidaire du récipient **(10)** par l'intermédiaire d'une conduite d'aspiration **(7)**.

50. Dispositif suivant la revendication 17, **caractérisé en ce que** le sous-groupe générant la dépression **(4)** est disposé sur le récipient **(10)** et qu'il se trouve en liaison directe avec celui-ci.

51. Dispositif suivant la revendication 17, **caractérisé en ce que** le sous-groupe générant la dépression **(4)** est intégré dans la conduite de dérivation à dépression **(28)**.

52. Dispositif suivant la revendication 17, **caractérisé en ce** que l'organe de fermeture **(15)** est une vanne, une soupape, un clapet, un diaphragme, une vis sans fin ou un sas à roue cellulaire.

53. Dispositif suivant l'une ou plusieurs des revendications précédentes 17 à 52, **caractérisé en ce que** les trémies déverseuses **(12 ; 13)** dans les récipients **(10 ; 11)** présentent un angle d'ouverture (α) de 60 à 12°.

54. Dispositif suivant l'une ou plusieurs des revendications précédentes 17 à 53, **caractérisé en ce que** les récipients **(10 ; 11)** possèdent un boîtier commun.
